(19) Europäisches Patentamt
European Patent Office
Office européen des brevets

(11) **EP 3 701 494 B1**

(12) **FASCICULE DE BREVET EUROPEEN**

(45) Date de publication et mention de la délivrance du brevet:
**02.04.2025 Bulletin 2025/14**

(21) Numéro de dépôt: **18786342.8**

(22) Date de dépôt: **16.10.2018**

(51) Classification Internationale des Brevets (IPC):
**G06T 7/00** *(2017.01)*     **G06T 7/10** *(2017.01)*
**G06T 7/62** *(2017.01)*

(52) Classification Coopérative des Brevets (CPC):
**G06T 7/0004; G06T 7/10; G06T 7/62;**
G06T 2207/20036; G06T 2207/20112;
G06T 2207/30108

(86) Numéro de dépôt international:
**PCT/EP2018/078241**

(87) Numéro de publication internationale:
**WO 2019/081278 (02.05.2019 Gazette 2019/18)**

(54) **PROCÉDÉ D'ESTIMATION D'UNE NOTE D'ADHÉSION ENTRE LA COMPOSITION DE CAOUTCHOUC ET LES PLIS DE RENFORT D'UNE ÉPROUVETTE REPRÉSENTATIVE D'UN PNEUMATIQUE À CARACTÉRISER**

VERFAHREN ZUR SCHÄTZUNG EINES HAFTUNGSGRADES ZWISCHEN DER KAUTSCHUKZUSAMMENSETZUNG UND DEN VERSTÄRKUNGSLAGEN EINES REPRÄSENTATIVEN PRÜFKÖRPERS FÜR EINEN ZU CHARAKTERISIERENDEN REIFEN

METHOD FOR ESTIMATING AN ADHESION GRADE BETWEEN THE RUBBER COMPOSITION AND THE REINFORCING PLIES OF A TEST SPECIMEN REPRESENTATIVE OF A TYRE TO BE CHARACTERIZED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2017 FR 1759990**

(43) Date de publication de la demande:
**02.09.2020 Bulletin 2020/36**

(73) Titulaire: **Compagnie Générale des Etablissements Michelin**
**63000 Clermont-Ferrand (FR)**

(72) Inventeurs:
• **ARVIS, Vincent**
 **63040 Clermont-Ferrand Cedex 09 (FR)**
• **MAGINIER, Pierre**
 **63040 Clermont-Ferrand Cedex 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
• **"ASTM D4393/D4393M - Standard Test Method for Strap Peel Adhesion of Reinforcing Cords or Fabrics to Rubber Compounds", ASTM BOOK OF STAND, ASTM, US, vol. 7.02, 1 January 2010 (2010-01-01), pages 1 - 7, XP008165933, DOI: 10.1520/D4393_D4393M-10**

EP 3 701 494 B1

**Description**

L'invention a pour domaine technique le traitement d'image et plus particulièrement le traitement d'image appliqué au contrôle de qualité, notamment dans la fabrication de pneumatiques.

Un pneumatique comprend généralement une bande de roulement en contact direct avec la route, munie de rainures et de blocs de sculpture et reposant sur une carcasse conférant sa résistance au pneumatique.

La carcasse peut être de type diagonale ou radiale, et comprend une superposition de plis de fibres de renfort noyées dans de la composition de caoutchouc. Un pli est une nappe de fibres de renfort essentiellement parallèles.

Lors du développement ou du suivi de la qualité de pneumatiques, il est courant de tester l'adhésion entre la composition de caoutchouc et les plis de renfort (textile ou métallique).

Pour réaliser un test d'adhérence, on fabrique une éprouvette avec les mêmes constituants et les mêmes procédés qu'un pneumatique dont l'adhésion entre la composition de caoutchouc et les plis de renfort est à tester. L'éprouvette ainsi obtenue est ensuite cuite sous pression puis mise au format attendu.

Cette éprouvette fait ensuite l'objet d'un arrachage par pelage de deux plis de renfort unis par la composition de caoutchouc au cours duquel on mesure la force de traction nécessaire pour les séparer. A l'issue de l'arrachage, l'éprouvette testée est séparée en deux demi-éprouvettes. Un opérateur attribue ensuite une note à l'éprouvette en fonction de l'observation visuelle des demi-éprouvettes et du taux de recouvrement du renfort par la composition de caoutchouc.

Toutefois, la reproductibilité du procédé décrit ci-dessus ainsi que la fiabilité des données obtenues sont variables du fait de l'inspection visuelle par un opérateur humain.

De l'état de la technique antérieure, on connaît les documents suivants.

Le document « AFNOR - NF ISO 36 - novembre 2011 » divulgue les caractéristiques de la norme française NF ISO 36 relative à une méthode d'essai de mesure de la force nécessaire pour séparer, par pelage, deux plis de textile unis par du caoutchouc ou une couche de caoutchouc liée à un pli de textile.

Le document « ASTM Standards - Standard Test Method for Strap Peel Adhesion of Reinforcing Cords or Fabrics to Rubber Compounds - D4393/D4393M - 10 » divulgue les méthodes standardisées pour mesurer l'adhésion des renforts de pneumatiques à travers des essais d'arrachages. Il y est fait mention de la notation visuelle par un opérateur humain.

L'utilisation d'un procédé automatique d'appréciation du taux de recouvrement du renfort par la composition de caoutchouc a été abordée dans le rapport de stage « Brendan Le Bouil - Caractérisation de l'adhésion tissu/composition de caoutchouc de pneumatiques par traitement d'images numériques - Laboratoire IMS - MICHELIN - Rapport de stage septembre 2014 » décrivant une étude de faisabilité d'une segmentation entre des renforts textile et la composition de caoutchouc sur des images d'éprouvettes, sans réalisation d'un procédé complet.

La segmentation présentée est basée sur un algorithme « SLIC superpixel » (acronyme anglophone pour « Simple Linear Iterative Clustering »), associé à un regroupement des superpixels. Cette segmentation n'est pas toujours efficace du fait de problèmes d'alignement des éprouvettes.

Le code de l'algorithme « SLIC superpixel » a été écrit d'après la publication de Radhakrishna Achanta, Appu Shaji, Kevin Smith, Aurelien Lucchi, Pascal Fua, et Sabine Süsstrunk, « SLIC Superpixels Compared to State-of-the-art Superpixel Methods », IEEE Transactions on Pattern Analysis and Machine Intelligence, vol. 34, num. 11, p. 2274 - 2282, May 2012.

Le document présente également la présence de « ponts de composition de caoutchouc » comme un point bloquant pour l'industrialisation de la segmentation dans le contrôle d'adhérence entre couches de renfort.

Il existe un besoin pour un procédé d'estimation d'une note fonction du taux de recouvrement du renfort par la composition de caoutchouc après un test d'arrachage par pelage d'une éprouvette qui présente une reproductibilité et une objectivité améliorées.

L'invention a pour objet un procédé d'estimation d'une note d'adhésion entre la composition de caoutchouc et les plis de renfort d'une éprouvette représentative d'un pneumatique à caractériser, ainsi que divulgué dans les revendications indépendantes 1, 5, 8, 10, 12 et 15. Certaines caractéristiques additionnelles étant précisées dans les revendications dépendantes.

L'éprouvette comprenant au moins deux plis de renforts noyés dans de la composition de caoutchouc, chaque pli de renfort comprenant lui-même des câbles de renforts disposés les uns à côté des autres

Le procédé comprenant les étapes suivantes :

on cuit sous pression l'éprouvette puis,
on réalise un test d'arrachage par pelage de deux plis de renfort de l'éprouvette.

Le procédé comprend en outre les étapes suivantes :

on acquiert au moins une image des deux demi-éprouvettes obtenue à l'issues du test d'arrachage par pelage,

on réalise un rognage des images acquises,

on détermine ensuite une première image séparant les zones de renforts des zones de composition de caoutchouc par décomposition en superpixels fonction des images acquises rognées, une première image étant choisie parmi une image de masque binaire de segmentation , une image de masque binaire de repli, une image de masque binaire de segmentation modifiée, une image de masque binaire de repli modifiée et une image de masque binaire de repli recalée,

on détermine une deuxième image des câbles de renfort fonction de l'espacement et du diamètre des câbles de renfort du pneumatique, une deuxième image étant choisie parmi une image théorique et une image théorique ajustée,

on détermine une note fonction du rapport de la surface des câbles de renfort dans la première image et de la surface des câbles de renfort dans la deuxième image,

On peut acquérir les images des demi-éprouvettes avec un scanner à plat.

On peut acquérir les images des demi-éprouvettes avec un scanner à plat en conjonction avec l'utilisation d'un support rigide de demi-éprouvettes permettant de contrôler le plaquage de chaque demi-éprouvette sur la vitre du scanner ainsi que leur alignement sur la zone d'acquisition du scanner.

Pour réaliser le rognage des images acquises, on peut réaliser des étapes au cours desquelles on supprime les composantes de couleur de l'image acquise de sorte à obtenir une image en niveaux de gris,

on applique ensuite un seuil en niveau de gris de sorte que les pixels ayant des niveaux de gris inférieurs au seuil se voient attribués une première valeur booléenne, les pixels ayant des niveaux de gris supérieurs ou égaux au seuil se voyant attribuer une deuxième valeur booléenne,

le seuil en niveau de gris étant choisi de sorte à supprimer l'image de fond et conserver l'image des éprouvettes,

on détermine un masque binaire de même taille que l'image en niveaux de gris, dans lequel chaque pixel de l'image à rogner est associé à la première ou deuxième valeur booléenne,

on réalise un filtrage morphologique de fermeture sur le masque binaire afin de relier les demi-éprouvettes,

on réalise un filtrage morphologique d'ouverture sur le masque binaire filtré précédemment obtenu afin d'éliminer le bruit.

Pour déterminer une première image telle qu'une image de masque binaire de segmentation, on peut réaliser des étapes au cours desquelles on applique une décomposition en superpixels à l'image rognée,

on détermine ensuite un masque binaire de segmentation comprenant les superpixels présentant à la fois une excentricité supérieure à un seuil d'excentricité et une luminance supérieure à un seuil de luminance.

Pour déterminer une deuxième image telle qu'une image théorique ajustée, on peut réaliser des étapes au cours desquelles

on réalise une opération logique ET entre une image de masque de segmentation et l'image théorique, puis

on mesure l'écart de position entre les câbles de l'image théorique et ceux de l'image de masque binaire de segmentation en faisant la somme de pixels à valeur booléenne non nulle, la mesure de l'écart étant répétée en boucle sur un intervalle de valeurs de pas et de positions du premier câble prédéfinis autour des valeurs initiales,

on retient les valeurs de pas et de positions du premier câble associées à la valeur la plus grande parmi les valeurs d'écart déterminées,

on détermine ensuite une image théorique ajustée en fonction des valeurs retenues de pas des câbles et de position du premier câble ainsi que de leur diamètre.

Pour déterminer une première image telle qu'une image de masque binaire de segmentation modifiée, on peut réaliser des étapes au cours desquelles,

si une image théorique ajustée n'est pas disponible,

on dilate le masque binaire de segmentation par un élément structurant représentant une ligne horizontale de largeur fonction de la distance entre deux câbles de renfort et du diamètre d'un câble de renfort, puis

on réalise ensuite une opération logique ET entre l'image théorique des câbles de renfort et l'image obtenue à l'issue de la dilatation de sorte à obtenir une image dite image de masque binaire de segmentation dilatée,

on réalise ensuite une reconstruction morphologique par ligne avec pour marqueur l'image de masque binaire de segmentation dilatée et pour masque l'image théorique afin d'obtenir une image de masque binaire de segmentation modifiée,

si une image théorique ajustée est disponible,

on dilate le masque binaire de de segmentation par un élément structurant représentant une ligne horizontale de largeur fonction de la distance entre deux câbles de renfort et du diamètre d'un câble de renfort, puis
on réalise ensuite une opération logique ET entre l'image théorique ajustée des câbles de renfort et l'image obtenue à l'issue de la dilatation de sorte à obtenir une image dite image de masque binaire de segmentation dilatée,
on réalise ensuite une reconstruction morphologique par ligne avec pour marqueur l'image de masque binaire de segmentation dilatée et pour masque l'image théorique ajustée afin d'obtenir une image de masque binaire de segmentation modifiée.

Pour déterminer une première image telle qu'un masque binaire de repli afin d'éviter les fausses détections, on peut réaliser des étapes au cours desquelles

on réalise une opération de miroir horizontal sur la partie inférieure de l'image de masque binaire de segmentation correspondant à une demi-éprouvette,
on détermine une image de masque binaire de repli en réalisant une opération logique OR entre chaque pixel du demi-masque supérieur et chaque pixel du miroir horizontal du demi-masque inférieur, de sorte à superposer les pixels correspondant à des câbles de renfort visibles sur les deux demi-éprouvettes.

Pour déterminer une deuxième image telle qu'une image théorique ajustée, on peut réaliser des étapes au cours desquelles

on réalise une opération logique ET entre l'image de masque binaire de repli et l'image théorique, puis
on mesure l'écart de position entre les câbles de l'image théorique et ceux de l'image de masque binaire de repli en faisant la somme de pixels à valeur booléenne non nulle, la mesure de l'écart étant répétée en boucle sur un intervalle de valeurs de pas et de positions du premier câble prédéfinis autour des valeurs initiales,
on retient les valeurs de pas et de positions du premier câble associées à la valeur la plus grande parmi les valeurs d'écart déterminées,
on détermine ensuite une image théorique ajustée en fonction des valeurs retenues de pas des câbles et de position du premier câble ainsi que de leur diamètre.

Pour déterminer une deuxième image telle qu'une image de repli modifiée, on peut réaliser des étapes au cours desquelles,

si une image théorique ajustée n'est pas disponible,
on dilate l'image de masque binaire de repli par un élément structurant représentant une ligne horizontale de largeur fonction de la distance entre deux câbles de renfort et du diamètre d'un câble de renfort, puis
on réalise ensuite une opération logique ET entre l'image théorique des câbles de renfort et l'image obtenue à l'issue de la dilatation de sorte à obtenir une image dite image de masque binaire de repli dilatée,
on réalise ensuite une reconstruction morphologique par ligne avec pour marqueur l'image de masque binaire de repli dilatée et pour masque l'image théorique afin d'obtenir une image de repli modifiée,
si une image théorique ajustée est disponible,
on dilate l'image de masque binaire de repli par un élément structurant représentant une ligne horizontale de largeur fonction de la distance entre deux câbles de renfort et du diamètre d'un câble de renfort, puis
on réalise ensuite une opération logique ET entre l'image théorique ajustée des câbles de renfort et l'image obtenue à l'issue de la dilatation de sorte à obtenir une image dite image de masque binaire de repli dilatée,
on réalise ensuite une reconstruction morphologique par ligne avec pour marqueur l'image de masque binaire de repli dilatée et pour masque l'image théorique ajustée afin d'obtenir une image de masque binaire de repli modifiée.

On peut déterminer deux demi-images de masque binaire de segmentation à partir de l'image de masque binaire de segmentation, et

pour chaque demi-image de masque binaire de segmentation, on peut déterminer une demi-image théorique, on peut déterminer une demi-image théorique ajustée fonction de la demi-image théorique et de la demi-image de masque binaire de segmentation, et on peut déterminer une demi-image de masque binaire de segmentation dilatée fonction de la demi-image de masque binaire de segmentation et de la demi-image théorique ajustée, puis
on peut réaliser une opération de miroir horizontal sur la demi-image de masque binaire de segmentation dilatée correspondant à la partie inférieure de l'image de masque binaire de segmentation et à une demi-éprouvette,
on peut appliquer un décalage horizontal à l'image de la demi-éprouvette issue de l'opération de miroir horizontal,
on peut déterminer une image de masque binaire de repli en réalisant une opération logique OR entre chaque pixel du demi-masque supérieur et chaque pixel du miroir horizontal du demi-masque inférieur, de sorte à superposer les pixels correspondant à des câbles de renfort visibles sur les deux demi-éprouvettes.

On peut déterminer au moins deux notes correspondant chacune à un décalage horizontal, puis on peut déterminer une note finale comme la note minimale parmi l'ensemble des notes obtenues pour chaque décalage horizontal.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principales étapes d'un premier mode de réalisation d'un procédé d'estimation selon l'invention,
- la figure 2 illustre les principales étapes d'un deuxième mode de réalisation d'un procédé d'estimation selon l'invention,
- la figure 3 illustre les principales étapes d'un troisième mode de réalisation d'un procédé d'estimation selon l'invention,
- la figure 4 illustre les principales étapes d'un quatrième mode de réalisation d'un procédé d'estimation selon l'invention,
- la figure 5 illustre les principales étapes d'un cinquième mode de réalisation d'un procédé d'estimation selon l'invention,
- la figure 6 illustre les principales étapes d'un sixième mode de réalisation d'un procédé d'estimation selon l'invention,
- la figure 7 illustre les ponts de composition de caoutchouc et les câbles de renfort d'une éprouvette,
- la figure 8 illustre l'image obtenue après une étape de rognage appliquée à une image acquise,
- la figure 9 illustre une image issue d'une décomposition en superpixels,
- la figure 10 illustre un masque binaire issu du classement de superpixels en fonction de leur excentricité et de leur luminance moyenne ainsi qu'un masque binaire de repli,
- la figure 11 illustre deux exemples d'image théorique des câbles de renfort avec des valeurs différentes de pas et diamètre, et
- la figure 12 illustre une image théorique de câbles de renfort, une superposition entre l'image de masque binaire de repli et l'image théorique ajustée et une image de masque binaire de repli modifiée.

L'invention consiste à remplacer l'inspection visuelle des éprouvettes après traction ainsi que l'attribution d'une note par une inspection et une attribution de note automatique, afin d'améliorer la reproductibilité et la confrontation des résultats d'observation.

Pour cela, une image est acquise au moyen d'un dispositif d'acquisition d'images, puis des méthodes d'analyse d'image sont employées afin de mesurer la surface de renfort visible, et une note est attribuée par l'intermédiaire de la détermination d'un taux de recouvrement issue de la comparaison de mesure et de la valeur théorique de surface des renforts.

Le procédé d'estimation comprend une première étape 1 au cours de laquelle on acquiert au moins une image de deux demi-éprouvettes issues d'une même éprouvette.

Pour réaliser l'acquisition d'image, tout dispositif d'acquisition d'images peut être employé, tel qu'une caméra, un capteur photographique ou un scanner, notamment un scanner à plat tel qu'utilisé généralement en bureautique. On préférera l'utilisation d'un scanner en conjonction avec l'utilisation d'un support rigide de demi-éprouvettes permettant de limiter les effets de profondeur de champ grâce à un bon plaquage de chaque demi-éprouvette sur la vitre du scanner et d'améliorer l'alignement des demi-éprouvettes grâce à un bon alignement sur la zone d'acquisition du scanner. L'acquisition d'image par scanner permet d'augmenter le contraste entre les différents constituants des demi-éprouvettes sur les images acquises (contraste de couleur dans le cas du textile, contraste de brillance dans le cas du métal).

Plus précisément, pour réaliser l'acquisition d'images, on place les demi-éprouvettes sur la vitre d'un scanner à plat par l'intermédiaire d'un support rigide préalablement fixé sur la vitre du scanner et aligné par rapport à la direction d'acquisition d'image.

Le support rigide comprend au moins une ouverture à la dimension d'une demi-éprouvette et permet d'assurer leur bon positionnement en limitant leur débattement latéral. Les supports étant alignés, les demi-éprouvettes le sont également. Chaque support rigide peut comprendre au moins une plaque rigide par ouverture, pouvant se visser audit support afin de plaquer les demi-éprouvettes correspondantes contre la vitre du scanner. En effet, malgré le recuit sous pression, les demi-éprouvettes conservent une courbure.

Le nombre de demi-éprouvettes pouvant faire l'objet d'une acquisition simultanée n'est limité que par la superficie du dispositif d'acquisition d'image.

Le procédé d'estimation se poursuit par un rognage des images acquises.

En effet, l'acquisition d'image par un scanner à plat se fait généralement sur la totalité de la surface de sa vitre. Un rognage est alors nécessaire pour limiter les images acquises à la surface des éprouvettes.

Pour réaliser le rognage des images acquises, on supprime les composantes de couleur de l'image de sorte à obtenir une image en niveaux de gris.

On applique ensuite un seuil en niveau de gris de sorte que les pixels ayant des niveaux de gris inférieurs au seuil se voient attribués une première valeur booléenne, par exemple 0, les pixels ayant des niveaux de gris supérieurs ou égaux au seuil se voyant attribuer une deuxième valeur booléenne, par exemple 1.

Le seuil est choisi de sorte à supprimer l'image de fond et conserver l'image des éprouvettes.

Il en résulte une image de masque binaire de même taille que l'image en niveaux de gris, dans lequel chaque pixel de l'image à rogner est associé à la première ou deuxième valeur booléenne.

On réalise ensuite un filtrage morphologique de fermeture sur l'image de masque binaire afin de relier les demi-éprouvettes. Pour cela, un élément structurant de forme ligne verticale et de longueur égale à l'intervalle entre demi-éprouvettes est utilisé.

On réalise ensuite un filtrage morphologique d'ouverture sur l'image de masque binaire filtré précédemment obtenu afin d'éliminer le bruit. Pour cela, un élément structurant de forme carrée et de taille égale au plus grand élément parasite à supprimer est utilisé.

On obtient une seule image comprenant les images des deux demi-éprouvettes issues du test d'arrachement d'une même éprouvette.

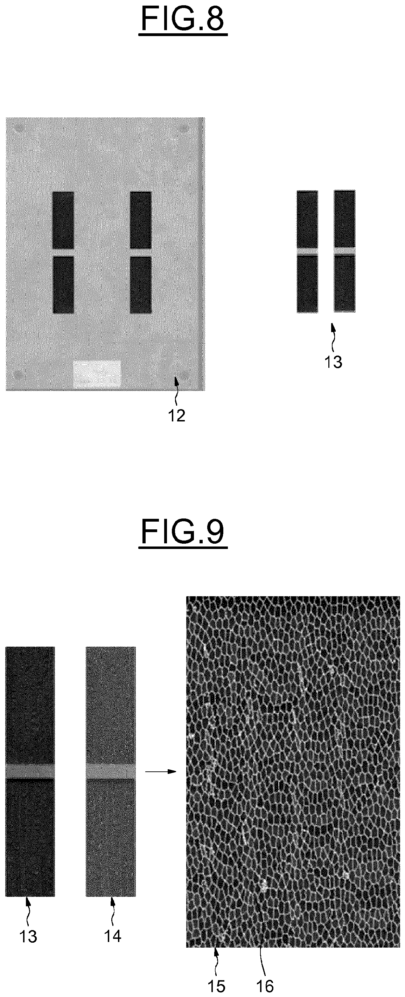

La figure 8 illustre une telle étape de rognage avec d'une part l'image acquise référencée 12 et l'image après rognage référencée 13.

Alternativement, il est possible de limiter la surface d'acquisition du scanner à plat aux seules ouvertures des supports rigides prépositionnés en fonction de leurs coordonnées dans la surface d'acquisition du scanner.

On détermine ensuite une image de masque binaire de segmentation.

La détermination d'une image de masque binaire de segmentation consiste à séparer les parties d'une image correspondant au renfort des parties de la même image correspondant à la composition de caoutchouc pour obtenir une partition de l'image sous forme d'une image de masque binaire de segmentation. En effet, les parties correspondant à la composition de caoutchouc se voient attribuer une première valeur booléenne, tandis que les parties correspondant au renfort se voient attribuer une deuxième valeur booléenne.

Pour obtenir l'image de masque binaire de segmentation, on applique une décomposition en superpixels à l'image issue de la deuxième étape, par l'application d'un algorithme SLIC. On obtient une partition pseudo régulière de l'image composée de superpixels de formes et de couleurs variées. Un superpixel est déterminé en regroupant des pixels connexes présentant des caractéristiques (couleur, intensité) proches.

L'algorithme SLIC est un processus itératif qui déforme une partition régulière (une grille) pour optimiser une condition prédéfinie en fonction des caractéristiques de l'image. La taille de la grille de départ et la quantité de déformation autorisée sont paramétrables.

La figure 9 illustre une image issue d'une décomposition en superpixels, référencée 14, obtenue à partir d'une image après rognage référencée 13. La figure 9 comprend également un agrandissement 15 d'une partie de l'image 14 issue d'une décomposition en superpixels, sur lequel on peut voir plus aisément les superpixels 16

Un tri sur la base de l'excentricité et de la luminance moyenne des superpixels offre une partition efficace et permet d'obtenir l'image de masque binaire souhaité.

Pour réaliser cela, on considère chaque superpixel comme une composante connexe de l'image sur laquelle des caractéristiques peuvent être mesurées. On calcule ainsi l'excentricité de chaque superpixel, qui correspond à l'excentricité de l'ellipse ayant le même moment d'ordre 2 que le superpixel. Ce critère traduit donc l'alongement du superpixel. On compare ensuite l'excentricité de chaque superpixel à un seuil, une première valeur booléenne étant associée aux superpixels dont l'excentricité est supérieure au seuil, une deuxième valeur booléenne étant associée aux superpixels dont l'excentricité est inférieure ou égale au seuil.

Par ailleurs, on détermine la luminance moyenne de chaque superpixel en divisant déterminant la moyenne arithmétique de la luminance de chaque pixel le composant. On compare ensuite la luminance moyenne de chaque superpixel à un seuil, une première valeur booléenne étant associée aux superpixels dont la luminance moyenne est supérieure au seuil, une deuxième valeur booléenne étant associée aux superpixels dont la luminance moyenne est inférieure ou égale au seuil.

On détermine ensuite une image de masque binaire comprenant les superpixels présentant à la fois une excentricité supérieure au seuil d'excentricité et une luminance supérieure au seuil de luminance. Cette image de masque binaire est déterminée en réalisant une opération logique ET entre chaque pixel de l'image de masque binaire d'excentricité et chaque pixel correspondant de l'image de masque binaire de luminance moyenne.

Plus précisément, on considère que les superpixels correspondant à la composition de caoutchouc présentent une excentricité et une luminance moyenne plus faible que celles de superpixels correspondant aux renforts. L'image de masque binaire obtenu comprend une première valeur booléenne pour chaque pixel au sein d'un superpixel associé à un câble de renfort et une deuxième valeur booléenne pour chaque pixel au sein d'un superpixel associé à de la composition de caoutchouc.

L'image de masque binaire ainsi obtenue est l'image de masque binaire de segmentation.

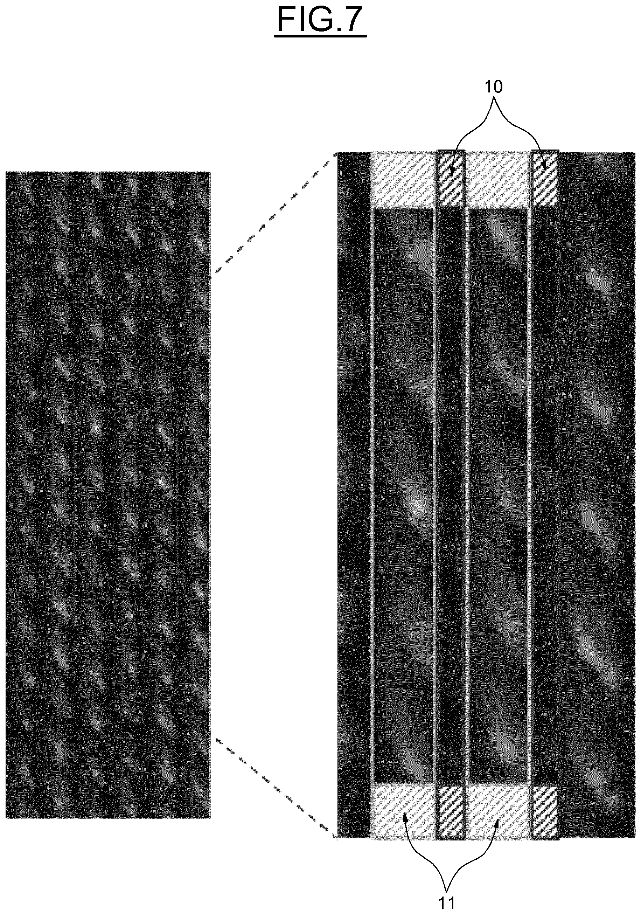

A partir de cette image de masque binaire de segmentation, il existe plusieurs modes de réalisation afin d'obtenir la note d'adhésion. A ce niveau du procédé, l'image des demi-éprouvettes n'est pas exploitable du fait de la présence de ponts de composition de caoutchouc. La surface de référence des demi-éprouvettes permettant de calculer le taux de recouvrement par la composition de caoutchouc ne correspond pas à leur surface totale. En effet, seule la surface du renfort compte. Il faut donc supprimer les ponts de composition de caoutchouc situés entre les câbles et référencés 10 par la figure 7. Les câbles sont référencés 11 sur cette même figure.

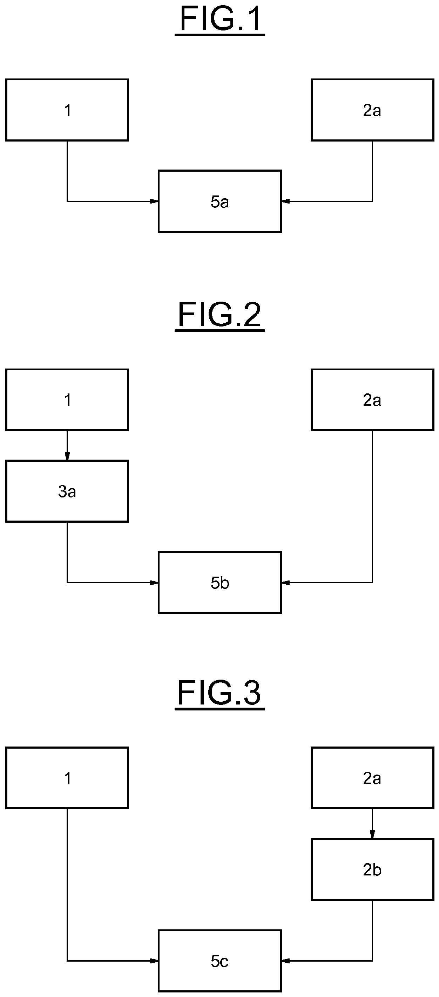

Dans un premier mode de réalisation illustré par la figure 1, au cours d'une étape de génération 2a d'une image théorique, on utilise un modèle théorique pour rendre l'image des demi-éprouvettes exploitable en offrant une surface de référence correspondant au seul renfort.

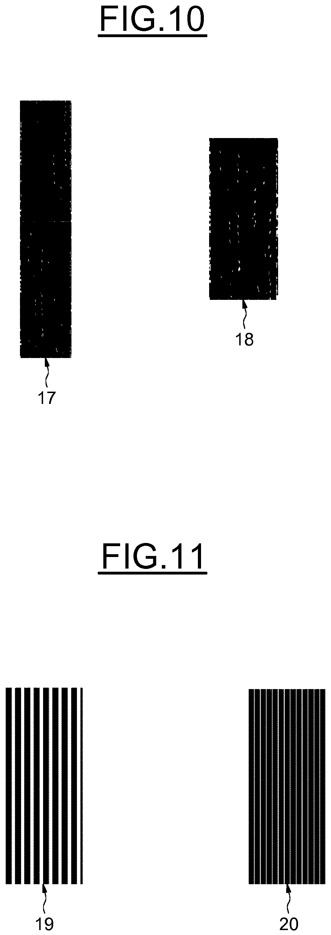

Connaissant le pas des câbles de renfort et leur diamètre dans l'éprouvette ainsi que la fonction de transfert pixels/mm du dispositif d'acquisition d'images, il est possible de générer une image théorique des câbles de renfort à nu. Par câble de renfort, on entend les fibres de renfort textile ou métallique d'une nappe de renfort utilisée dans la confection de l'éprouvette. La figure 11 illustre deux exemples 19,20 d'image théorique des câbles de renfort avec des valeurs différentes de pas et diamètre.

Le procédé d'estimation se termine par une cinquième étape 5a de détermination d'une note N quantifiant le taux de recouvrement des câbles de renfort et de la composition de caoutchouc :

N=1 - (surface métal image de masque binaire de segmentation) / (surface métal image théorique)

Il est à noter que lorsque l'on considère un masque binaire, une surface est déterminée comme la somme des valeurs des pixels du masque.

Dans un deuxième mode de réalisation illustré par la figure 2, au cours d'une étape de génération 2a d'une image théorique, on utilise un modèle théorique pour rendre l'image des demi-éprouvettes exploitable en offrant une surface de référence correspondant au seul renfort.

Connaissant le pas des câbles de renfort et leur diamètre dans l'éprouvette ainsi que la fonction de transfert pixels/mm du dispositif d'acquisition d'images, il est possible de générer une image théorique des câbles de renfort à nu. Par câble de renfort, on entend les fibres de renfort textile ou métallique d'une nappe de renfort utilisée dans la confection de l'éprouvette.

Afin d'éviter que des zones de renfort soient comptées deux fois (une fois par demi-éprouvette), ce qui conduirait à une note négative (n'ayant pas de sens physiquement), le procédé se poursuit par une troisième étape de repli 3a au cours de laquelle on réalise les deux sous-étapes suivantes.

Au cours d'une première sous-étape, on réalise une opération de miroir horizontal sur la partie inférieure de l'image de masque binaire de segmentation correspondant à une demi-éprouvette.

Au cours d'une deuxième sous-étape, on détermine une image de masque binaire de repli en réalisant une opération logique OR entre chaque pixel du demi-masque supérieur et chaque pixel du miroir horizontal du demi-masque inférieur, de sorte à superposer les pixels correspondant à des câbles de renfort visibles sur les deux demi-éprouvettes.

Le procédé d'estimation se termine alors par une cinquième étape 5b de détermination d'une note N quantifiant le taux de recouvrement des câbles de renfort et de la composition de caoutchouc :

N=1 - (surface métal image de masque binaire de repli) / (surface métal image théorique)

Dans un troisième mode de réalisation illustré par la figure 3, au cours d'une étape de génération 2a d'une image théorique, on utilise un modèle théorique pour rendre l'image des demi-éprouvettes exploitable en offrant une surface de référence correspondant au seul renfort.

Connaissant le pas des câbles de renfort et leur diamètre dans l'éprouvette ainsi que la fonction de transfert pixels/mm du dispositif d'acquisition d'images, il est possible de générer une image théorique des câbles de renfort à nu. Par câble de renfort, on entend les fibres de renfort textile ou métallique d'une nappe de renfort utilisée dans la confection de l'éprouvette.

On détermine une image théorique ajustée afin de prendre en compte les différences entre pas théorique et pas observé tout en prenant en compte un décalage du premier câble. Cette étape permet d'améliorer l'image théorique ainsi que la notation qui en découle.

Pour réaliser cela, on réalise une étape 2b d'ajustement de l'image théorique au cours de laquelle, on fait varier le pas de câbles ainsi que la position du premier câble autour de leurs valeurs initiales définies dans le modèle théorique afin d'obtenir une image théorique ajustée qui se superpose au mieux à l'image de masque binaire de repli.

Plus précisément, l'étape 2b d'ajustement de l'image théorique comprend les sous-étapes suivantes.

On réalise une opération logique ET entre l'image théorique et l'image de masque binaire de segmentation puis on mesure l'écart de position entre les câbles de l'image théorique et ceux de l'image de masque binaire de segmentation en faisant la somme de pixels à valeur booléenne non nulle de l'image obtenue par l'opération logique ET.

La mesure de cet écart est répétée en boucle en déterminant une nouvelle image théorique présentant une valeur de pas et de position du premier câble compris dans un intervalle de valeurs de pas et de positions du premier câble prédéfinis autour des valeurs initiales du modèle théorique. Les valeurs de pas et de position du premier câble retenues sont celles qui conduisent à une valeur la plus grande de l'écart.

On détermine ensuite une image théorique ajustée en fonction du pas des câbles et de la position du premier câble après variation ainsi que de leur diamètre dans le pneumatique.

Le procédé d'estimation se termine alors par une cinquième étape 5c de détermination d'une note N quantifiant le taux de recouvrement des câbles de renfort et de la composition de caoutchouc :

N=1 - (surface métal image de masque binaire de segmentation) / (surface métal image théorique ajustée)

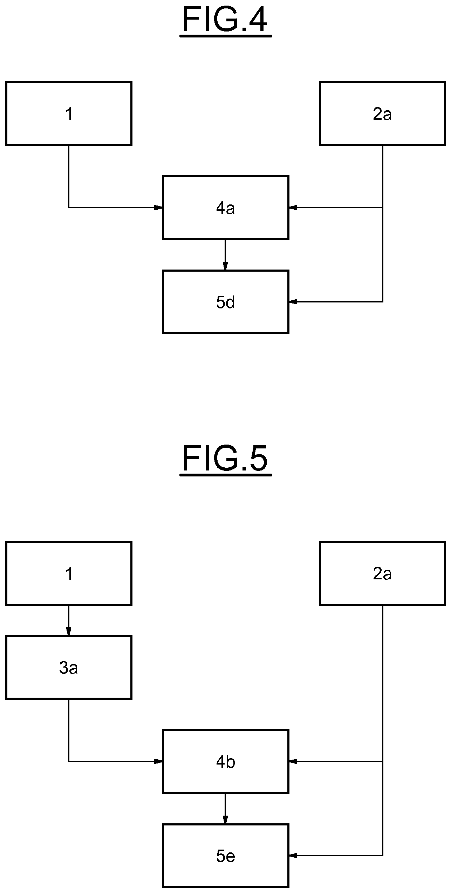

Dans un quatrième mode de réalisation illustré par la figure 4, au cours d'une étape de génération 2a d'une image théorique, on utilise un modèle théorique pour rendre l'image des demi-éprouvettes exploitable en offrant une surface de référence correspondant au seul renfort.

Connaissant le pas des câbles de renfort et leur diamètre dans l'éprouvette ainsi que la fonction de transfert pixels/mm du dispositif d'acquisition d'images, il est possible de générer une image théorique des câbles de renfort à nu. Par câble de renfort, on entend les fibres de renfort textile ou métallique d'une nappe de renfort utilisée dans la confection de l'éprouvette.

On compense les mauvais alignements entre demi-éprouvettes en réalisant une dilatation de l'image de masque binaire de segmentation pour compenser les défauts d'alignement afin de prendre en compte les morceaux de câbles d'éprouvettes non superposés au modèle théorique.

Pour réaliser cela, au cours d'une quatrième étape 4a, on dilate l'image de masque binaire de segmentation par un élément structurant présentant une forme de ligne horizontale de largeur F :

$$F = intercable - diametrecable + 1$$

Avec :

Intercable : distance entre deux câbles de renfort
Diametrecable : diamètre d'un câble de renfort

On réalise ensuite une opération logique ET entre l'image de masque binaire de segmentation dilaté et l'image théorique des câbles de renfort de sorte à obtenir une image dite image de masque binaire de segmentation dilatée. Cette image traduit les portions de l'image théorique qui présentent des câbles à nu.

On réalise ensuite une reconstruction morphologique basée sur l'image de masque binaire de segmentation dilatée.

Sur une ligne horizontale, tout morceau de câble à nu doit compter comme une ligne de câble. Pour prendre en compte cette hypothèse, une reconstruction morphologique par ligne est effectuée avec pour marqueur l'image de masque binaire de segmentation dilatée et pour masque l'image théorique afin d'obtenir une image dite image de masque binaire de segmentation modifiée.

Le procédé d'estimation se termine alors par une cinquième étape 5d de détermination d'une note N quantifiant le taux de recouvrement des câbles de renfort et de la composition de caoutchouc :

N=1 - (surface métal image de masque binaire de segmentation modifiée) / (surface métal image théorique)

Dans un cinquième mode de réalisation illustré par la figure 5, au cours d'une étape de génération 2a d'une image théorique, on utilise un modèle théorique pour rendre l'image des demi-éprouvettes exploitable en offrant une surface de référence correspondant au seul renfort.

Connaissant le pas des câbles de renfort et leur diamètre dans l'éprouvette ainsi que la fonction de transfert pixels/mm du dispositif d'acquisition d'images, il est possible de générer une image théorique des câbles de renfort à nu. Par câble de renfort, on entend les fibres de renfort textile ou métallique d'une nappe de renfort utilisée dans la confection de l'éprouvette.

On combine les étapes et les avantages du deuxième, troisième et quatrième modes de réalisation.

Au cours d'une étape d'ajustement de l'image théorique, on réalise une opération logique ET entre l'image théorique et l'image de masque binaire de segmentation puis on mesure l'écart de position entre les câbles de l'image théorique et ceux de l'image de masque binaire de segmentation en faisant la somme de pixels à valeur booléenne non nulle de l'image obtenue par l'opération logique ET.

La mesure de cet écart est répétée en boucle en déterminant une nouvelle image théorique présentant une valeur de pas et de position du premier câble compris dans un intervalle de valeurs de pas et de positions du premier câble prédéfinis autour des valeurs initiales du modèle théorique. Les valeurs de pas et de position du premier câble retenues sont celles qui conduisent à une valeur la plus grande de l'écart.

On détermine ensuite une image théorique ajustée en fonction du pas des câbles et de la position du premier câble après variation ainsi que de leur diamètre dans le pneumatique.

Au cours d'une première sous-étape d'une troisième étape de repli 3a, on réalise une opération de miroir horizontal sur la partie inférieure de l'image de masque binaire de segmentation correspondant à une demi-éprouvette.

Au cours d'une deuxième sous-étape d'une troisième étape de repli 3a, on détermine une image de masque binaire de repli en réalisant une opération logique OR entre chaque pixel du demi-masque supérieur et chaque pixel du miroir horizontal du demi-masque inférieur, de sorte à superposer les pixels correspondant à des câbles de renfort visibles sur les deux demi-éprouvettes.

Au cours d'une quatrième étape 4b, on dilate l'image de masque binaire de repli par un élément structurant présentant une forme de ligne horizontale de largeur F :

$$F = intercable - diametrecable + 1$$

Avec :

Intercable : distance entre deux câbles de renfort
Diametrecable : diamètre d'un câble de renfort

On réalise ensuite une opération logique ET entre l'image de masque binaire de repli et l'image théorique ajustée de sorte à obtenir une image dite image de masque binaire de repli dilatée. Cette image traduit les portions de l'image théorique ajustée qui présentent des câbles à nu.

On réalise ensuite une reconstruction morphologique basée sur l'image de masque binaire de repli dilatée.

Sur une ligne horizontale, tout morceau de câble à nu doit compter comme une ligne de câble. Pour prendre en compte cette hypothèse, une reconstruction morphologique par ligne est effectuée avec pour marqueur l'image de masque binaire de repli dilatée et pour masque l'image théorique ajustée afin d'obtenir une image dite image de masque binaire de repli modifiée.

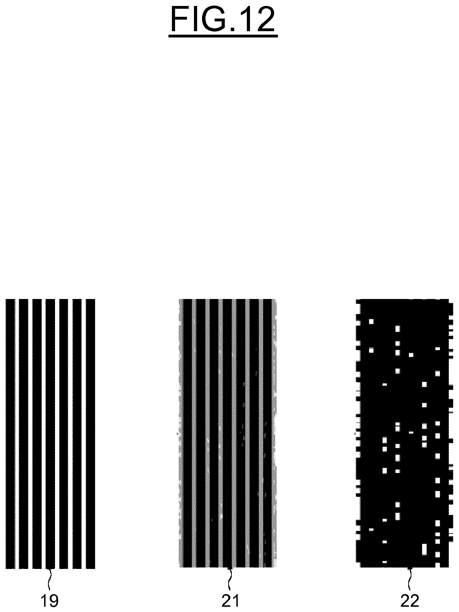

La figure 12 illustre une image théorique ajustée 19 de câbles de renfort, une superposition image de masque binaire de repli-image théorique ajustée 21 et une image de masque binaire de repli modifiée 22.

Le procédé d'estimation se termine alors par une cinquième étape 5e de détermination d'une note N quantifiant le taux de recouvrement des câbles de renfort et de la composition de caoutchouc :

N=1 - (surface métal image de masque binaire de repli modifiée) / (surface métal image théorique)

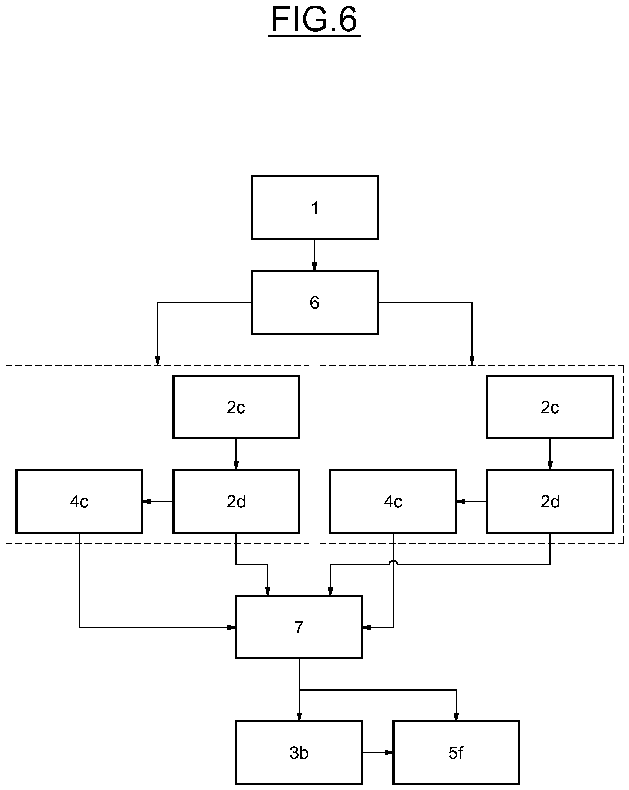

Dans un sixième mode de réalisation illustré par la figure 6, au cours d'une étape 6 de partition, on détermine deux demi-images de masque binaire de segmentation à partir de l'image de masque binaire de segmentation en la séparant en 2 sous-images de même taille suivant une ligne horizontale.

Pour chaque demi-image de masque binaire de segmentation, on réalise les étapes suivantes :
Au cours d'une étape de génération 2c d'une demi-image théorique, on utilise un modèle théorique pour rendre l'image des demi-éprouvettes exploitable en offrant une surface de référence correspondant au seul renfort.

Connaissant le pas des câbles de renfort et leur diamètre dans l'éprouvette ainsi que la fonction de transfert pixels/mm du dispositif d'acquisition d'images, il est possible de générer une demi-image théorique des câbles de renfort à nu correspondant au demi-masque de segmentation. Par câble de renfort, on entend les fibres de renfort textile ou métallique d'une nappe de renfort utilisée dans la confection de l'éprouvette.

Au cours d'une étape 2d d'ajustement de la demi-image théorique, on réalise une opération logique ET entre la demi-image théorique et la demi-image de masque binaire de segmentation puis on mesure l'écart de position entre les câbles de la demi-image théorique et ceux de la demi-image de masque binaire de segmentation en faisant la somme de pixels à valeur booléenne non nulle de l'image obtenue par l'opération logique ET.

La mesure de cet écart est répétée en boucle en déterminant une nouvelle demi-image théorique présentant une valeur de pas et de position du premier câble compris dans un intervalle de valeurs de pas et de positions du premier câble prédéfinis autour des valeurs initiales du modèle théorique. Les valeurs de pas et de position du premier câble retenues sont celles qui conduisent à une valeur la plus grande de l'écart.

On détermine ensuite une demi-image théorique ajustée en fonction du pas des câbles et de la position du premier câble après variation ainsi que de leur diamètre dans le pneumatique.

Au cours d'une quatrième étape 4c, on dilate la demi-image de masque binaire de segmentation par un élément structurant présentant une forme de ligne horizontale de largeur F :

$$F = intercable - diametrecable + 1$$

Avec :

Intercable : distance entre deux câbles de renfort
Diametrecable : diamètre d'un câble de renfort

Au cours d'une étape 7, on réalise ensuite une opération logique ET entre la demi-image de masque binaire de segmentation dilaté et la demi-image théorique ajustée des câbles de renfort de sorte à obtenir une demi-image de masque binaire de segmentation dilatée. Cette demi-image traduit les portions de la demi-image théorique qui présentent des câbles à nu.

A ce stade du procédé, on obtient une demi-image de masque binaire de segmentation dilatée pour chaque demi-image de masque binaire de segmentation.

Le procédé se poursuit alors par une étape de détermination 3b d'une image de masque binaire de repli recalée à partir des demi-images de masque binaire de segmentation dilatées.

Cette étape se base sur les troisièmes étapes de repli 3a décrites dans les modes de réalisation précédents, modifiées de sorte à ajouter la recherche du meilleur décalage entre les demi éprouvettes.

En effet, les étapes de repli 3a décrivent un repli simple consistant à effectuer un miroir de l'un des demi-masques de segmentation dilaté et à faire une opération logique OU avec l'autre demi-masque, puis de calculer la note.

La présente variante consiste à réaliser une troisième-sous étape au cours de laquelle on applique un décalage horizontal à l'image de la deuxième demi-éprouvette issue de la première sous-étape au cours de laquelle on réalise une opération de miroir horizontal. On réalise ensuite la deuxième-sous étape au cours de laquelle une opération logique OR est réalisée.

Le procédé d'estimation se poursuit par une cinquième étape 5f de détermination d'une note N quantifiant le taux de recouvrement des câbles de renfort et de la composition de caoutchouc :

N=1 - (surface métal image de masque binaire de repli recalée) / (surface métal image théorique ajustée)

On mémorise alors la note et le décalage horizontal associé.

La troisième sous-étape, la deuxième sous-étape et le calcul de la note sont ensuite répétés pour au moins un décalage horizontal différent. Les décalages horizontaux sont choisis sur un intervalle de plus ou moins deux écarts de pas.

Le procédé se termine par la détermination de la note finale et du décalage associé. La note finale est égale à la valeur minimale parmi l'ensemble des notes déterminées. Un tel mode de réalisation permet de prendre en compte les décalages gauche-droite entre demi-éprouvettes et de choisir la meilleure superposition entre demi-masques (qui conduit à la note mini).

Le procédé d'estimation permet ainsi d'estimer le taux de recouvrement des câbles de renfort par la composition de caoutchouc après un test d'arrachage par pelage d'une éprouvette. Ce procédé présente une reproductibilité et une objectivité améliorées par rapport à l'inspection visuelle par un opérateur humain du fait de la segmentation et des masques binaires de seuillage employés.

Le procédé d'estimation permet ainsi d'estimer le taux de recouvrement des câbles de renfort par la composition de caoutchouc après un test d'arrachage par pelage d'une éprouvette. Ce procédé présente une reproductibilité et une objectivité améliorées par rapport à l'inspection visuelle par un opérateur humain du fait de la segmentation et des masques binaires de seuillage employés.

## Revendications

1. Procédé d'estimation d'une note d'adhésion entre la composition de caoutchouc et les plis de renfort d'une éprouvette représentative d'un pneumatique à caractériser,

l'éprouvette comprenant au moins deux plis de renforts noyés dans de la composition de caoutchouc, chaque pli de renfort comprenant lui-même des câbles de renforts disposés les uns à côté des autres,

le procédé comprenant les étapes suivantes :

on cuit sous pression l'éprouvette, puis
on réalise un test d'arrachage par pelage de deux plis de renfort de l'éprouvette,
**caractérisé par le fait qu'**il comprend les étapes suivantes :

on dispose les deux demi-éprouvettes sur un scanner à plat, alignées dans la direction d'acquisition d'image du scanner,
on acquiert une image sur toute la surface du scanner,
on réalise un rognage des images acquises de sorte à ne conserver que l'image des demi-éprouvettes,
on détermine ensuite au moins une image de masque binaire de segmentation séparant les zones de renforts des zones de composition de caoutchouc par décomposition en superpixels à partir des pixels des images acquises rognées,
on génère au moins une image théorique des câbles de renfort fonction de l'espacement et du diamètre des câbles de renfort ,
on détermine une note égale à la valeur un moins le rapport de la surface des câbles de renfort dans l' image de masque binaire de segmentation et de la surface des câbles de renfort dans l'image théorique des câbles de renfort.

2. Procédé selon la revendication 1, dans lequel on acquiert les images des demi-éprouvettes en utilisant un support rigide de demi-éprouvettes permettant de contrôler le plaquage de chaque demi-éprouvette sur la vitre du scanner ainsi que leur alignement sur la zone d'acquisition du scanner.

3. Procédé selon l'une quelconque des revendications précédentes, dans lequel, pour déterminer une image de masque binaire de segmentation, on applique une décomposition en superpixels à l'image rognée par l'application d'un algorithme SLIC, pour obtenir une image composée de superpixels, un superpixel étant déterminé en regroupant des pixels connexes présentant des caractéristiques proches,
on détermine ensuite le masque binaire de segmentation comprenant une première valeur booléenne pour chaque pixel au sein d'un superpixel présentant à la fois une excentricité supérieure à un seuil d'excentricité et une luminance supérieure à un seuil de luminance et une deuxième valeur booléenne pour les autres pixels.

4. Procédé selon l'une quelconque des revendications précédentes, dans lequel, pour générer une image théorique ajustée,

on réalise une opération logique ET entre l' image de masque de segmentation et l'image théorique, puis
on mesure l'écart de position entre les câbles de l'image théorique et ceux de l'image de masque binaire de segmentation,
on détermine une nouvelle image théorique présentant une valeur de pas et de position du premier câble compris dans un intervalle de valeurs de pas et de positions du premier câble prédéfinis autour des valeurs initiales, et on mesure l'écart de position entre les câbles de la nouvelle image théorique et ceux de l'image de masque binaire de segmentation,
les étapes de détermination d'une nouvelle image théorique et de mesure de l'écart de position sont répétées en boucle pour un nombre prédéfini d'itérations, puis
on retient les valeurs de pas et de positions du premier câble associées à la valeur la plus grande parmi les valeurs d'écart déterminées,
on détermine ensuite une image théorique ajustée en fonction des valeurs retenues de pas des câbles et de position du premier câble ainsi que de leur diamètre.

5. Procédé d'estimation d'une note d'adhésion entre la composition de caoutchouc et les plis de renfort d'une éprouvette représentative d'un pneumatique à caractériser,

l'éprouvette comprenant au moins deux plis de renforts noyés dans de la composition de caoutchouc, chaque pli de renfort comprenant lui-même des câbles de renforts disposés les uns à côté des autres,
le procédé comprenant les étapes suivantes :

on cuit sous pression l'éprouvette, puis
on réalise un test d'arrachage par pelage de deux plis de renfort de l'éprouvette,
**caractérisé par le fait qu'**il comprend les étapes suivantes :

on dispose les deux demi-éprouvettes sur un scanner à plat, alignées dans la direction d'acquisition d'image du scanner,

on acquiert une image sur toute la surface du scanner,

on réalise un rognage des images acquises de sorte à ne conserver que l'image des demi-éprouvettes,

on génère au moins une image théorique des câbles de renfort fonction de l'espacement et du diamètre des câbles de renfort ,

on détermine une image de masque binaire de segmentation modifiée en réalisant les étapes suivantes :

si une image théorique ajustée n'est pas disponible,

on dilate le masque binaire de de segmentation par un élément structurant représentant une ligne selon la direction d'acquisition d'image du scanner de largeur fonction de la distance entre deux câbles de renfort et du diamètre d'un câble de renfort, puis

on réalise ensuite une opération logique ET entre l'image théorique des câbles de renfort et l'image obtenue à l'issue de la dilatation de sorte à obtenir une image dite image de masque binaire de segmentation dilatée,

on réalise ensuite une reconstruction morphologique par ligne avec pour marqueur l'image de masque binaire de segmentation dilatée et pour masque l'image théorique afin d'obtenir une image de masque binaire de segmentation modifiée,

on détermine ensuite une note d'adhésion égale à la valeur un moins le rapport de la surface des câbles de renfort dans l'image de masque binaire de segmentation modifiée et de la surface des câbles de renfort dans l'image théorique des câbles de renfort,

si une image théorique ajustée est disponible,

on dilate le masque binaire de de segmentation par un élément structurant représentant une ligne selon la direction d'acquisition d'image du scanner de largeur fonction de la distance entre deux câbles de renfort et du diamètre d'un câble de renfort, puis

on réalise ensuite une opération logique ET entre l'image théorique ajustée des câbles de renfort et l'image obtenue à l'issue de la dilatation de sorte à obtenir une image dite image de masque binaire de segmentation dilatée,

on réalise ensuite une reconstruction morphologique par ligne avec pour marqueur l'image de masque binaire de segmentation dilatée et pour masque l'image théorique ajustée afin d'obtenir une image de masque binaire de segmentation modifiée,

on détermine ensuite une note d'adhésion égale à la valeur un moins le rapport de la surface des câbles de renfort dans l'image de masque binaire de segmentation modifiée et de la surface des câbles de renfort dans l'image théorique ajustée des câbles de renfort.

6. Procédé selon la revendication 5, dans lequel, pour déterminer une image de masque binaire de segmentation, on applique une décomposition en superpixels à l'image rognée par l'application d'un algorithme SLIC, pour obtenir une image composée de superpixels, un superpixel étant déterminé en regroupant des pixels connexes présentant des caractéristiques proches,

on détermine ensuite le masque binaire de segmentation comprenant une première valeur booléenne pour chaque pixel au sein d'un superpixel présentant à la fois une excentricité supérieure à un seuil d'excentricité et une luminance supérieure à un seuil de luminance et une deuxième valeur booléenne pour les autres pixels.

7. Procédé selon l'une quelconque des revendications 5 ou 6, dans lequel, pour générer une image théorique ajustée,

on réalise une opération logique ET entre l' image de masque de segmentation et l'image théorique, puis

on mesure l'écart de position entre les câbles de l'image théorique et ceux de l'image de masque binaire de segmentation,

on détermine une nouvelle image théorique présentant une valeur de pas et de position du premier câble compris dans un intervalle de valeurs de pas et de positions du premier câble prédéfinis autour des valeurs initiales, et on mesure l'écart de position entre les câbles de la nouvelle image théorique et ceux de l'image de masque binaire de segmentation,

les étapes de détermination d'une nouvelle image théorique et de mesure de l'écart de position sont répétées en boucle pour un nombre prédéfini d'itérations, puis

on retient les valeurs de pas et de positions du premier câble associées à la valeur la plus grande parmi les valeurs d'écart déterminées,

on détermine ensuite une image théorique ajustée en fonction des valeurs retenues de pas des câbles et de position du premier câble ainsi que de leur diamètre.

8. Procédé d'estimation d'une note d'adhésion entre la composition de caoutchouc et les plis de renfort d'une éprouvette représentative d'un pneumatique à caractériser,

l'éprouvette comprenant au moins deux plis de renforts noyés dans de la composition de caoutchouc, chaque pli de renfort comprenant lui-même des câbles de renforts disposés les uns à côté des autres,
le procédé comprenant les étapes suivantes :

on cuit sous pression l'éprouvette, puis
on réalise un test d'arrachage par pelage de deux plis de renfort de l'éprouvette,
**caractérisé par le fait qu'**il comprend les étapes suivantes :

on dispose les deux demi-éprouvettes sur un scanner à plat, alignées dans la direction d'acquisition d'image du scanner,
on acquiert une image sur toute la surface du scanner,
on réalise un rognage des images acquises de sorte à ne conserver que l'image des demi-éprouvettes,
on détermine ensuite au moins une image de masque binaire de segmentation séparant les zones de renforts des zones de composition de caoutchouc par décomposition en superpixels à partir des pixels des images acquises rognées,
on génère au moins une image théorique des câbles de renfort fonction de l'espacement et du diamètre des câbles de renfort,
on détermine une image de masque binaire de repli afin d'éviter les fausses détections en réalisant les étapes suivantes :

on définit une droite parallèle à la direction d'acquisition d'image du scanner séparant l'image de masque binaire de segmentation en une première partie et une deuxième partie,
on réalise une opération de miroir par rapport à ladite droite sur la deuxième partie de l'image de masque binaire de segmentation correspondant à une demi-éprouvette, et
on détermine une image de masque binaire de repli en réalisant une opération logique OR entre chaque pixel du premier demi-masque et chaque pixel du miroir du deuxième demi-masque, de sorte à superposer les pixels correspondant à des câbles de renfort visibles sur les deux demi-éprouvettes,
on détermine ensuite une note d'adhésion égale à la valeur un moins le rapport de la surface des câbles de renfort dans l'image de masque binaire de repli et de la surface des câbles de renfort dans l'image théorique des câbles de renfort.

9. Procédé selon la revendication 8, dans lequel, pour déterminer une image de masque binaire de segmentation, on applique une décomposition en superpixels à l'image rognée par l'application d'un algorithme SLIC, pour obtenir une image composée de superpixels, un superpixel étant déterminé en regroupant des pixels connexes présentant des caractéristiques proches,
on détermine ensuite le masque binaire de segmentation comprenant une première valeur booléenne pour chaque pixel au sein d'un superpixel présentant à la fois une excentricité supérieure à un seuil d'excentricité et une luminance supérieure à un seuil de luminance et une deuxième valeur booléenne pour les autres pixels.

10. Procédé d'estimation d'une note d'adhésion entre la composition de caoutchouc et les plis de renfort d'une éprouvette représentative d'un pneumatique à caractériser,

l'éprouvette comprenant au moins deux plis de renforts noyés dans de la composition de caoutchouc, chaque pli de renfort comprenant lui-même des câbles de renforts disposés les uns à côté des autres,
le procédé comprenant les étapes suivantes :

on cuit sous pression l'éprouvette, puis
on réalise un test d'arrachage par pelage de deux plis de renfort de l'éprouvette,
**caractérisé par le fait qu'**il comprend les étapes suivantes :

on dispose les deux demi-éprouvettes sur un scanner à plat, alignées dans la direction d'acquisition d'image du scanner,
on acquiert une image sur toute la surface du scanner,
on réalise un rognage des images acquises de sorte à ne conserver que l'image des demi-éprouvettes,

on détermine ensuite au moins une image de masque binaire de segmentation séparant les zones de renforts des zones de composition de caoutchouc par décomposition en superpixels à partir des pixels des images acquises rognées,

on génère au moins une image théorique des câbles de renfort fonction de l'espacement et du diamètre des câbles de renfort ,

on détermine une image de masque binaire de repli afin d'éviter les fausses détections en réalisant les étapes suivantes :

on définit une droite parallèle à la direction d'acquisition d'image du scanner séparant l'image de masque binaire de segmentation en une première partie et une deuxième partie,

on réalise une opération de miroir par rapport à ladite droite sur la deuxième partie de l'image de masque binaire de segmentation correspondant à une demi-éprouvette, et

on détermine une image de masque binaire de repli en réalisant une opération logique OR entre chaque pixel d'un premier demi-masque et chaque pixel du miroir d'un deuxième demi-masque, de sorte à superposer les pixels correspondant à des câbles de renfort visibles sur les deux demi-éprouvettes,

on génère une image théorique ajustée en réalisant les étapes suivantes :

on réalise une opération logique ET entre l'image de masque binaire de repli et l'image théorique, puis

on mesure l'écart de position entre les câbles de l'image théorique et ceux de l'image de masque binaire de repli, on détermine une nouvelle image théorique présentant une valeur de pas et de position du premier câble compris dans un intervalle de valeurs de pas et de positions du premier câble prédéfinis autour des valeurs initiales, et on mesure l'écart de position entre les câbles de la nouvelle image théorique et ceux de l'image de masque binaire de binaire de repli,

les étapes de détermination d'une nouvelle image théorique et de mesure de l'écart de position sont répétées en boucle pour un nombre prédéfini d'itérations, puis

on retient les valeurs de pas et de positions du premier câble associées à la valeur la plus grande parmi les valeurs d'écart déterminées,

on détermine ensuite une image théorique ajustée en fonction des valeurs retenues de pas des câbles et de position du premier câble ainsi que de leur diamètre, et

on détermine ensuite une note d'adhésion égale à la valeur un moins le rapport de la surface des câbles de renfort dans l'image de masque binaire de segmentation et de la surface des câbles de renfort dans l'image théorique ajustée des câbles de renfort.

11. Procédé selon la revendication 10, dans lequel, pour déterminer une image de masque binaire de segmentation, on applique une décomposition en superpixels à l'image rognée par l'application d'un algorithme SLIC, pour obtenir une image composée de superpixels, un superpixel étant déterminé en regroupant des pixels connexes présentant des caractéristiques proches,

on détermine ensuite le masque binaire de segmentation comprenant une première valeur booléenne pour chaque pixel au sein d'un superpixel présentant à la fois une excentricité supérieure à un seuil d'excentricité et une luminance supérieure à un seuil de luminance et une deuxième valeur booléenne pour les autres pixels.

12. Procédé d'estimation d'une note d'adhésion entre la composition de caoutchouc et les plis de renfort d'une éprouvette représentative d'un pneumatique à caractériser,

l'éprouvette comprenant au moins deux plis de renforts noyés dans de la composition de caoutchouc, chaque pli de renfort comprenant lui-même des câbles de renforts disposés les uns à côté des autres,

le procédé comprenant les étapes suivantes :

on cuit sous pression l'éprouvette, puis

on réalise un test d'arrachage par pelage de deux plis de renfort de l'éprouvette,

**caractérisé par le fait qu'**il comprend les étapes suivantes :

on dispose les deux demi-éprouvettes sur un scanner à plat, alignées dans la direction d'acquisition d'image du scanner,

on acquiert une image sur toute la surface du scanner,

on réalise un rognage des images acquises de sorte à ne conserver que l'image des demi-éprouvettes, on détermine ensuite au moins une image de masque binaire de segmentation séparant les zones de renforts des zones de composition de caoutchouc par décomposition en superpixels à partir des pixels des images acquises rognées, on génère au moins une image théorique des câbles de renfort fonction de l'espacement et du diamètre des câbles de renfort, on détermine une image de masque binaire de repli afin d'éviter les fausses détections en réalisant les étapes suivantes :

on définit une droite parallèle à la direction d'acquisition d'image du scanner séparant l'image de masque binaire de segmentation en une première partie et une deuxième partie, on réalise une opération de miroir selon ladite droite sur la deuxième partie de l'image de masque binaire de segmentation correspondant à une demi-éprouvette, et on détermine une image de masque binaire de repli en réalisant une opération logique OR entre chaque pixel d'un premier demi-masque et chaque pixel du miroir du deuxième demi-masque, de sorte à superposer les pixels correspondant à des câbles de renfort visibles sur les deux demi-éprouvettes, on détermine une image de masque binaire de repli modifiée en réalisant les étapes suivantes :

si une image théorique ajustée n'est pas disponible, on dilate l'image de masque binaire de repli par un élément structurant représentant une ligne selon la direction d'acquisition d'image du scanner de largeur fonction de la distance entre deux câbles de renfort et du diamètre d'un câble de renfort, puis on réalise ensuite une opération logique ET entre l'image théorique des câbles de renfort et l'image obtenue à l'issue de la dilatation de sorte à obtenir une image dite image de masque binaire de repli dilatée, on réalise ensuite une reconstruction morphologique par ligne avec pour marqueur l'image de masque binaire de repli dilatée et pour masque l'image théorique afin d'obtenir une image de masque binaire de repli modifiée, on détermine ensuite une note d'adhésion égale à la valeur un moins le rapport de la surface des câbles de renfort dans l'image de masque binaire de repli modifiée et de la surface des câbles de renfort dans l'image théorique des câbles de renfort, si une image théorique ajustée est disponible, on dilate l'image de masque binaire de repli par un élément structurant représentant une ligne selon la direction d'acquisition d'image du scanner de largeur fonction de la distance entre deux câbles de renfort et du diamètre d'un câble de renfort, puis on réalise ensuite une opération logique ET entre l'image théorique ajustée des câbles de renfort et l'image obtenue à l'issue de la dilatation de sorte à obtenir une image dite image de masque binaire de repli dilatée, on réalise ensuite une reconstruction morphologique par ligne avec pour marqueur l'image de masque binaire de repli dilatée et pour masque l'image théorique ajustée afin d'obtenir une image de masque binaire de repli modifiée, on détermine ensuite une note d'adhésion égale à la valeur un moins le rapport de la surface des câbles de renfort dans l'image de masque binaire de repli modifiée et de la surface des câbles de renfort dans l'image théorique ajustée des câbles de renfort.

13. Procédé selon la revendication 12, dans lequel, pour déterminer une image de masque binaire de segmentation, on applique une décomposition en superpixels à l'image rognée par l'application d'un algorithme SLIC, pour obtenir une image composée de superpixels, un superpixel étant déterminé en regroupant des pixels connexes présentant des caractéristiques proches, on détermine ensuite le masque binaire de segmentation comprenant une première valeur booléenne pour chaque pixel au sein d'un superpixel présentant à la fois une excentricité supérieure à un seuil d'excentricité et une luminance supérieure à un seuil de luminance et une deuxième valeur booléenne pour les autres pixels.

14. Procédé selon l'une quelconque des revendications 12 ou 13, dans lequel, pour générer une image théorique ajustée,

on réalise une opération logique ET entre l' image de masque de segmentation et l'image théorique, puis on mesure l'écart de position entre les câbles de l'image théorique et ceux de l'image de masque binaire de segmentation,

on détermine une nouvelle image théorique présentant une valeur de pas et de position du premier câble compris dans un intervalle de valeurs de pas et de positions du premier câble prédéfinis autour des valeurs initiales, et on mesure l'écart de position entre les câbles de la nouvelle image théorique et ceux de l'image de masque binaire de segmentation,

les étapes de détermination d'une nouvelle image théorique et de mesure de l'écart de position sont répétées en boucle pour un nombre prédéfini d'itérations, puis

on retient les valeurs de pas et de positions du premier câble associées à la valeur la plus grande parmi les valeurs d'écart déterminées,

on détermine ensuite une image théorique ajustée en fonction des valeurs retenues de pas des câbles et de position du premier câble ainsi que de leur diamètre.

**15.** Procédé d'estimation d'une note d'adhésion entre la composition de caoutchouc et les plis de renfort d'une éprouvette représentative d'un pneumatique à caractériser,

l'éprouvette comprenant au moins deux plis de renforts noyés dans de la composition de caoutchouc, chaque pli de renfort comprenant lui-même des câbles de renforts disposés les uns à côté des autres,

le procédé comprenant les étapes suivantes :

on cuit sous pression l'éprouvette, puis

on réalise un test d'arrachage par pelage de deux plis de renfort de l'éprouvette,

**caractérisé par le fait qu'**il comprend les étapes suivantes :

on dispose les deux demi-éprouvettes sur un scanner à plat, alignées dans la direction d'acquisition d'image du scanner,

on acquiert une image sur toute la surface du scanner,

on réalise un rognage des images acquises de sorte à ne conserver que l'image des demi-éprouvettes,

on détermine ensuite au moins une image de masque binaire de segmentation séparant les zones de renforts des zones de composition de caoutchouc par décomposition en superpixels à partir des pixels des images acquises rognées,

on génère au moins une image théorique des câbles de renfort fonction de l'espacement et du diamètre des câbles de renfort,

on génère une image théorique ajustée en réalisant les étapes suivantes :

on réalise une opération logique ET entre l'image de masque binaire de repli et l'image théorique, puis

on mesure l'écart de position entre les câbles de l'image théorique et ceux de l'image de masque binaire de repli, on détermine une nouvelle image théorique présentant une valeur de pas et de position du premier câble compris dans un intervalle de valeurs de pas et de positions du premier câble prédéfinis autour des valeurs initiales, et on mesure l'écart de position entre les câbles de la nouvelle image théorique et ceux de l'image de masque binaire de binaire de repli,

les étapes de détermination d'une nouvelle image théorique et de mesure de l'écart de position sont répétées en boucle pour un nombre prédéfini d'itérations, puis

on retient les valeurs de pas et de positions du premier câble associées à la valeur la plus grande parmi les valeurs d'écart déterminées,

on détermine ensuite une image théorique ajustée en fonction des valeurs retenues de pas des câbles et de position du premier câble ainsi que de leur diamètre,

on détermine une image de masque binaire de repli recalée en réalisant les étapes suivantes :

on détermine deux demi-images de masque binaire de segmentation à partir de l'image de masque binaire de segmentation, et

pour chaque demi-image de masque binaire de segmentation, on génère une demi-image théorique, on détermine une demi-image théorique ajustée fonction de la demi-image théorique et de la demi-image de masque binaire de segmentation, et on détermine une demi-image de masque binaire de segmentation dilatée fonction de la demi-image de masque binaire de segmentation et de la demi-image théorique ajustée, puis

on définit une droite parallèle à la direction d'acquisition d'image du scanner séparant l'image de masque binaire de segmentation en une première partie et une deuxième partie,

on réalise une opération de miroir selon ladite droite sur la demi-image de masque binaire de segmentation dilatée correspondant à la deuxième partie de l'image de masque binaire de segmentation et à une demi-éprouvette,

on applique un décalage selon la direction d'acquisition d'image du scanner à l'image de la demi-éprouvette issue de l'opération de miroir,

on détermine une image de masque binaire de repli recalée en réalisant une opération logique OR entre chaque pixel du premier demi-masque et chaque pixel du miroir du deuxième demi-masque, de sorte à superposer les pixels correspondant à des câbles de renfort visibles sur les deux demi-éprouvettes,

on détermine ensuite une note d'adhésion égale à la valeur un moins le rapport de la surface des câbles de renfort dans l'image de masque binaire de repli recalée et de la surface des câbles de renfort dans l'image théorique ajustée des câbles de renfort.

**16.** Procédé selon la revendication 15, dans lequel,

On détermine au moins deux notes correspondant chacune à un décalage selon la direction d'acquisition d'image du scanner, puis

On détermine une note finale comme la note minimale parmi l'ensemble des notes obtenues pour chaque décalage selon la direction d'acquisition d'image du scanner.

**17.** Procédé selon la revendication 16, dans lequel, pour déterminer une image de masque binaire de segmentation, on applique une décomposition en superpixels à l'image rognée par l'application d'un algorithme SLIC, pour obtenir une image composée de superpixels, un superpixel étant déterminé en regroupant des pixels connexes présentant des caractéristiques proches,

on détermine ensuite le masque binaire de segmentation comprenant une première valeur booléenne pour chaque pixel au sein d'un superpixel présentant à la fois une excentricité supérieure à un seuil d'excentricité et une luminance supérieure à un seuil de luminance et une deuxième valeur booléenne pour les autres pixels.


**Patentansprüche**

**1.** Verfahren zur Schätzung eines Haftungsgrades zwischen der Kautschukzusammensetzung und den Verstärkungslagen eines Prüfkörpers, der für einen zu charakterisierenden Reifen repräsentativ ist,

wobei der Prüfkörper mindestens zwei Verstärkungslagen beinhaltet, die in der Kautschukzusammensetzung eingebettet sind, wobei jede Verstärkungslage wiederum Verstärkungskorde beinhaltet, die nebeneinander angeordnet sind,

wobei das Verfahren die folgenden Schritte beinhaltet:

Kochen des Prüfkörpers unter Druck, dann

Durchführen eines Abreißversuchs durch Abziehen von zwei Verstärkungslagen des Prüfkörpers,

**dadurch gekennzeichnet, dass** es die folgenden Schritte beinhaltet:

Anordnen der zwei Prüfkörperhälften auf einem Flachbettscanner, ausgerichtet nach der Bilderfassungsrichtung des Scanners,

Erfassen eines Bilds über die gesamte Oberfläche des Scanners,

Durchführen einer Beschneidung der erfassten Bilder, sodass nur das Bild der Prüfkörperhälften übrig bleibt, anschließend Bestimmen mindestens eines Segmentierungsbinärmaskenbilds, das die Verstärkungsbereiche von den Kautschukzusammensetzungsbereichen trennt, durch Zerlegung in Superpixel auf Grundlage der Pixel der beschnittenen erfassten Bilder,

Generieren mindestens eines Sollbilds der Verstärkungskorde in Abhängigkeit von dem Abstand und dem Durchmesser der Verstärkungskorde,

Bestimmen eines Grades, der gleich dem Wert eins minus das Verhältnis der Oberfläche der Verstärkungskorde in dem Segmentierungsbinärmaskenbild und der Oberfläche der Verstärkungskorde in dem Sollbild der Verstärkungskorde ist.

**2.** Verfahren nach Anspruch 1, wobei die Bilder der Prüfkörperhälften unter Verwendung eines starren Halters für Prüfkörperhälften erfasst werden, der es gestattet, das Auflegen jeder Prüfkörperhälfte auf das Glas des Scanners sowie ihre Ausrichtung nach dem Erfassungsbereich des Scanners zu kontrollieren.

3. Verfahren nach einem der vorhergehenden Ansprüche, wobei, um ein Segmentierungsbinärmaskenbild zu bestimmen, durch die Anwendung eines SLIC-Algorithmus eine Zerlegung in Superpixel auf das beschnittene Bild angewendet wird, um ein aus Superpixeln zusammengesetztes Bild zu erhalten, wobei ein Superpixel durch das Gruppieren von zusammenhängenden Pixeln mit ähnlichen Eigenschaften bestimmt wird,

anschließend die Segmentierungsbinärmaske bestimmt wird, die einen ersten booleschen Wert für jedes Pixel innerhalb eines Superpixels, das gleichzeitig eine Exzentrizität größer als ein Exzentrizitätsschwellenwert und eine Leuchtdichte größer als ein Leuchtdichteschwellenwert aufweist, und einen zweiten booleschen Wert für die anderen Pixel beinhaltet.

4. Verfahren nach einem der vorhergehenden Ansprüche, wobei, um ein angepasstes Sollbild zu generieren,

eine logische UND-Operation zwischen dem Segmentierungsmaskenbild und dem Sollbild durchgeführt wird, dann

die Positionsabweichung zwischen den Korden des Sollbilds und denjenigen des Segmentierungsbinärmaskenbilds gemessen wird,

ein neues Sollbild bestimmt wird, das einen Wert eines Zwischenabstands und einer Position des ersten Kords aufweist, der in einem Intervall von Werten von Zwischenabständen und Positionen des ersten Kords, die um die Anfangswerte herum definiert sind, enthalten ist, und die Positionsabweichung zwischen den Korden des neuen Sollbilds und denjenigen des Segmentierungsbinärmaskenbilds gemessen wird,

die Schritte zur Bestimmung eines neuen Sollbilds und zur Messung der Positionsabweichung für eine vordefinierte Anzahl von Iterationen in Schleife wiederholt werden, dann

die Werte von Zwischenabständen und Positionen des ersten Kords zurückbehalten werden, die mit dem größten Wert unter den bestimmten Abweichungswerten assoziiert sind, anschließend ein angepasstes Sollbild in Abhängigkeit von den zurückbehaltenen Werten eines Zwischenabstands der Korde und einer Position des ersten Kords sowie ihrem Durchmesser bestimmt wird.

5. Verfahren zur Schätzung eines Haftungsgrades zwischen der Kautschukzusammensetzung und den Verstärkungslagen eines Prüfkörpers, der für einen zu charakterisierenden Reifen repräsentativ ist,

wobei der Prüfkörper mindestens zwei Verstärkungslagen beinhaltet, die in der Kautschukzusammensetzung eingebettet sind, wobei jede Verstärkungslage wiederum Verstärkungskorde beinhaltet, die nebeneinander angeordnet sind,

wobei das Verfahren die folgenden Schritte beinhaltet:

Kochen des Prüfkörpers unter Druck, dann Durchführen eines Abreißversuchs durch Abziehen von zwei Verstärkungslagen des Prüfkörpers,

**dadurch gekennzeichnet, dass** es die folgenden Schritte beinhaltet:

Anordnen der zwei Prüfkörperhälften auf einem Flachbettscanner, ausgerichtet nach der Bilderfassungsrichtung des Scanners,

Erfassen eines Bilds über die gesamte Oberfläche des Scanners,

Durchführen einer Beschneidung der erfassten Bilder, sodass nur das Bild der Prüfkörperhälften übrig bleibt, Generieren mindestens eines Sollbilds der Verstärkungskorde in Abhängigkeit von dem Abstand und dem Durchmesser der Verstärkungskorde,

Bestimmen eines modifizierten Segmentierungsbinärmaskenbilds durch das Durchführen der folgenden Schritte:

wenn ein angepasstes Sollbild nicht verfügbar ist,

Dilatieren der Segmentierungsbinärmaske durch ein strukturierendes Element, das eine Linie gemäß der Bilderfassungsrichtung des Scanners mit einer Breite in Abhängigkeit von der Distanz zwischen zwei Verstärkungskorden und dem Durchmesser eines Verstärkungskords darstellt, dann

anschließend Durchführen einer logischen UND-Operation zwischen dem Sollbild der Verstärkungskorde und dem nach der Dilatation erhaltenen Bild, um ein Bild zu erhalten, das als dilatiertes Segmentierungsbinärmaskenbild bezeichnet wird,

anschließend Durchführen einer morphologischen Rekonstruktion pro Linie mit dem dilatierten Segmentierungsbinärmaskenbild als Marker und dem Sollbild als Maske, um ein modifiziertes Segmentierungsbinärmaskenbild zu erhalten,

anschließend Bestimmen eines Haftungsgrades, der gleich dem Wert eins minus das Verhältnis der Oberfläche der Verstärkungskorde in dem modifizierten Segmentierungsbinärmaskenbild und der Oberfläche der Verstärkungskorde in dem Sollbild der Verstärkungskorde ist,

wenn ein angepasstes Sollbild verfügbar ist,

Dilatieren der Segmentierungsbinärmaske durch ein strukturierendes Element, das eine Linie gemäß der Bilderfassungsrichtung des Scanners mit einer Breite in Abhängigkeit von der Distanz zwischen zwei Verstärkungskorden und dem Durchmesser eines Verstärkungskords darstellt, dann

anschließend Durchführen einer logischen UND-Operation zwischen dem angepassten Sollbild der Verstärkungskorde und dem nach der Dilatation erhaltenen Bild, um ein Bild zu erhalten, das als dilatiertes Segmentierungsbinärmaskenbild bezeichnet wird,

anschließend Durchführen einer morphologischen Rekonstruktion pro Linie mit dem dilatierten Segmentierungsbinärmaskenbild als Marker und dem angepassten Sollbild als Maske, um ein modifiziertes Segmentierungsbinärmaskenbild zu erhalten,

anschließend Bestimmen eines Haftungsgrades, der gleich dem Wert eins minus das Verhältnis der Oberfläche der Verstärkungskorde in dem modifizierten Segmentierungsbinärmaskenbild und der Oberfläche der Verstärkungskorde in dem angepassten Sollbild der Verstärkungskorde ist.

6. Verfahren nach Anspruch 5, wobei, um ein Segmentierungsbinärmaskenbild zu bestimmen, durch die Anwendung eines SLIC-Algorithmus eine Zerlegung in Superpixel auf das beschnittene Bild angewendet wird, um ein aus Superpixeln zusammengesetztes Bild zu erhalten, wobei ein Superpixel durch das Gruppieren von zusammenhängenden Pixeln mit ähnlichen Eigenschaften bestimmt wird,

anschließend die Segmentierungsbinärmaske bestimmt wird, die einen ersten booleschen Wert für jedes Pixel innerhalb eines Superpixels, das gleichzeitig eine Exzentrizität größer als ein Exzentrizitätsschwellenwert und eine Leuchtdichte größer als ein Leuchtdichteschwellenwert aufweist, und einen zweiten booleschen Wert für die anderen Pixel beinhaltet.

7. Verfahren nach einem der Ansprüche 5 oder 6, wobei, um ein angepasstes Sollbild zu generieren,

eine logische UND-Operation zwischen dem Segmentierungsmaskenbild und dem Sollbild durchgeführt wird, dann

die Positionsabweichung zwischen den Korden des Sollbilds und denjenigen des Segmentierungsbinärmaskenbilds gemessen wird,

ein neues Sollbild bestimmt wird, das einen Wert eines Zwischenabstands und einer Position des ersten Kords aufweist, der in einem Intervall von Werten von Zwischenabständen und Positionen des ersten Kords, die um die Anfangswerte herum definiert sind, enthalten ist, und die Positionsabweichung zwischen den Korden des neuen Sollbilds und denjenigen des Segmentierungsbinärmaskenbilds gemessen wird,

die Schritte zur Bestimmung eines neuen Sollbilds und zur Messung der Positionsabweichung für eine vordefinierte Anzahl von Iterationen in Schleife wiederholt werden, dann

die Werte von Zwischenabständen und Positionen des ersten Kords zurückbehalten werden, die mit dem größten Wert unter den bestimmten Abweichungswerten assoziiert sind, anschließend ein angepasstes Sollbild in Abhängigkeit von den zurückbehaltenen Werten eines Zwischenabstands der Korde und einer Position des ersten Kords sowie ihrem Durchmesser bestimmt wird.

8. Verfahren zur Schätzung eines Haftungsgrades zwischen der Kautschukzusammensetzung und den Verstärkungslagen eines Prüfkörpers, der für einen zu charakterisierenden Reifen repräsentativ ist,

wobei der Prüfkörper mindestens zwei Verstärkungslagen beinhaltet, die in der Kautschukzusammensetzung eingebettet sind, wobei jede Verstärkungslage wiederum Verstärkungskorde beinhaltet, die nebeneinander angeordnet sind,

wobei das Verfahren die folgenden Schritte beinhaltet:

Kochen des Prüfkörpers unter Druck, dann
Durchführen eines Abreißversuchs durch Abziehen von zwei Verstärkungslagen des Prüfkörpers, **dadurch gekennzeichnet, dass** es die folgenden Schritte beinhaltet:

Anordnen der zwei Prüfkörperhälften auf einem Flachbettscanner, ausgerichtet nach der Bilderfassungsrichtung des Scanners,
Erfassen eines Bilds über die gesamte Oberfläche des Scanners,

Durchführen einer Beschneidung der erfassten Bilder, sodass nur das Bild der Prüfkörperhälften übrig bleibt, anschließend Bestimmen mindestens eines Segmentierungsbinärmaskenbilds, das die Verstärkungsbereiche von den Kautschukzusammensetzungsbereichen trennt, durch Zerlegung in Superpixel auf Grundlage der Pixel der beschnittenen erfassten Bilder,

Generieren mindestens eines Sollbilds der Verstärkungskorde in Abhängigkeit von dem Abstand und dem Durchmesser der Verstärkungskorde,

Bestimmen eines gefalteten Binärmaskenbilds, um falsche Erkennungen zu vermeiden, durch das Durchführen der folgenden Schritte:

Definieren einer Geraden parallel zu der Bilderfassungsrichtung des Scanners, die das Segmentierungsbinärmaskenbild in einen ersten Teil und einen zweiten Teil trennt,

Durchführen einer Spiegelungsoperation in Bezug auf die Gerade an dem zweiten Teil des Segmentierungsbinärmaskenbilds, der einer Prüfkörperhälfte entspricht, und

Bestimmen eines gefalteten Binärmaskenbilds durch das Durchführen einer logischen ODER-Operation zwischen jedem Pixel der ersten Maskenhälfte und jedem Pixel der gespiegelten zweiten Maskenhälfte, um die Pixel übereinanderzulegen, die sichtbaren Verstärkungskorden in den zwei Prüfkörperhälften entsprechen,

anschließend Bestimmen eines Haftungsgrades, der gleich dem Wert eins minus das Verhältnis der Oberfläche der Verstärkungskorde in dem gefalteten Binärmaskenbild und der Oberfläche der Verstärkungskorde in dem Sollbild der Verstärkungskorde ist.

9. Verfahren nach Anspruch 8, wobei, um ein Segmentierungsbinärmaskenbild zu bestimmen, durch die Anwendung eines SLIC-Algorithmus eine Zerlegung in Superpixel auf das beschnittene Bild angewendet wird, um ein aus Superpixeln zusammengesetztes Bild zu erhalten, wobei ein Superpixel durch das Gruppieren von zusammenhängenden Pixeln mit ähnlichen Eigenschaften bestimmt wird,

anschließend die Segmentierungsbinärmaske bestimmt wird, die einen ersten booleschen Wert für jedes Pixel innerhalb eines Superpixels, das gleichzeitig eine Exzentrizität größer als ein Exzentrizitätsschwellenwert und eine Leuchtdichte größer als ein Leuchtdichteschwellenwert aufweist, und einen zweiten booleschen Wert für die anderen Pixel beinhaltet.

10. Verfahren zur Schätzung eines Haftungsgrades zwischen der Kautschukzusammensetzung und den Verstärkungslagen eines Prüfkörpers, der für einen zu charakterisierenden Reifen repräsentativ ist,

wobei der Prüfkörper mindestens zwei Verstärkungslagen beinhaltet, die in der Kautschukzusammensetzung eingebettet sind, wobei jede Verstärkungslage wiederum Verstärkungskorde beinhaltet, die nebeneinander angeordnet sind,

wobei das Verfahren die folgenden Schritte beinhaltet:

Kochen des Prüfkörpers unter Druck, dann Durchführen eines Abreißversuchs durch Abziehen von zwei Verstärkungslagen des Prüfkörpers,

**dadurch gekennzeichnet, dass** es die folgenden Schritte beinhaltet:

Anordnen der zwei Prüfkörperhälften auf einem Flachbettscanner, ausgerichtet nach der Bilderfassungsrichtung des Scanners,

Erfassen eines Bilds über die gesamte Oberfläche des Scanners,

Durchführen einer Beschneidung der erfassten Bilder, sodass nur das Bild der Prüfkörperhälften übrig bleibt, anschließend Bestimmen mindestens eines Segmentierungsbinärmaskenbilds, das die Verstärkungsbereiche von den Kautschukzusammensetzungsbereichen trennt, durch Zerlegung in Superpixel auf Grundlage der Pixel der beschnittenen erfassten Bilder,

Generieren mindestens eines Sollbilds der Verstärkungskorde in Abhängigkeit von dem Abstand und dem Durchmesser der Verstärkungskorde,

Bestimmen eines gefalteten Binärmaskenbilds, um falsche Erkennungen zu vermeiden, durch das Durchführen der folgenden Schritte:

Definieren einer Geraden parallel zu der Bilderfassungsrichtung des Scanners, die das Segmentierungsbinärmaskenbild in einen ersten Teil und einen zweiten Teil trennt,

Durchführen einer Spiegelungsoperation in Bezug auf die Gerade an dem zweiten Teil des Segmentierungsbinärmaskenbilds, der einer Prüfkörperhälfte entspricht, und

Bestimmen eines gefalteten Binärmaskenbilds durch das Durchführen einer logischen ODER-Operation zwischen jedem Pixel einer ersten Maskenhälfte und jedem Pixel einer gespiegelten zweiten Maskenhälfte, um die Pixel übereinanderzulegen, die sichtbaren Verstärkungskorden in den zwei Prüfkörperhälften entsprechen,
Generieren eines angepassten Sollbilds durch das Durchführen der folgenden Schritte:

Durchführen einer logischen UND-Operation zwischen dem gefalteten Binärmaskenbild und dem Sollbild, dann Messen der Positionsabweichung zwischen den Korden des Sollbilds und denjenigen des gefalteten Binärmaskenbilds, Bestimmen eines neuen Sollbilds, das einen Wert eines Zwischenabstands und einer Position des ersten Kords aufweist, der in einem Intervall von Werten von Zwischenabständen und Positionen des ersten Kords, die um die Anfangswerte herum definiert sind, enthalten ist, und Messen der Positionsabweichung zwischen den Korden des neuen Sollbilds und denjenigen des gefalteten Binärmaskenbilds, Wiederholen der Schritte zur Bestimmung eines neuen Sollbilds und zur Messung der Positionsabweichung für eine vordefinierte Anzahl von Iterationen in Schleife, dann Zurückbehalten der Werte von Zwischenabständen und Positionen des ersten Kords, die mit dem größten Wert unter den bestimmten Abweichungswerten assoziiert sind, anschließend Bestimmen eines angepassten Sollbilds in Abhängigkeit von den zurückbehaltenen Werten eines Zwischenabstands der Korde und einer Position des ersten Kords sowie ihrem Durchmesser und
anschließend Bestimmen eines Haftungsgrads, der gleich dem Wert eins minus das Verhältnis der Oberfläche der Verstärkungskorde in dem Segmentierungsbinärmaskenbild und der Oberfläche der Verstärkungskorde in dem angepassten Sollbild der Verstärkungskorde ist.

11. Verfahren nach Anspruch 10, wobei, um ein Segmentierungsbinärmaskenbild zu bestimmen, durch die Anwendung eines SLIC-Algorithmus eine Zerlegung in Superpixel auf das beschnittene Bild angewendet wird, um ein aus Superpixeln zusammengesetztes Bild zu erhalten, wobei ein Superpixel durch das Gruppieren von zusammenhängenden Pixeln mit ähnlichen Eigenschaften bestimmt wird,
anschließend die Segmentierungsbinärmaske bestimmt wird, die einen ersten booleschen Wert für jedes Pixel innerhalb eines Superpixels, das gleichzeitig eine Exzentrizität größer als ein Exzentrizitätsschwellenwert und eine Leuchtdichte größer als ein Leuchtdichteschwellenwert aufweist, und einen zweiten booleschen Wert für die anderen Pixel beinhaltet.

12. Verfahren zur Schätzung eines Haftungsgrades zwischen der Kautschukzusammensetzung und den Verstärkungslagen eines Prüfkörpers, der für einen zu charakterisierenden Reifen repräsentativ ist,

wobei der Prüfkörper mindestens zwei Verstärkungslagen beinhaltet, die in der Kautschukzusammensetzung eingebettet sind, wobei jede Verstärkungslage wiederum Verstärkungskorde beinhaltet, die nebeneinander angeordnet sind,
wobei das Verfahren die folgenden Schritte beinhaltet:

Kochen des Prüfkörpers unter Druck, dann
Durchführen eines Abreißversuchs durch Abziehen von zwei Verstärkungslagen des Prüfkörpers, **dadurch gekennzeichnet, dass** es die folgenden Schritte beinhaltet:

Anordnen der zwei Prüfkörperhälften auf einem Flachbettscanner, ausgerichtet nach der Bilderfassungsrichtung des Scanners,
Erfassen eines Bilds über die gesamte Oberfläche des Scanners,
Durchführen einer Beschneidung der erfassten Bilder, sodass nur das Bild der Prüfkörperhälften übrig bleibt, anschließend Bestimmen mindestens eines Segmentierungsbinärmaskenbilds, das die Verstärkungsbereiche von den Kautschukzusammensetzungsbereichen trennt, durch Zerlegung in Superpixel auf Grundlage der Pixel der beschnittenen erfassten Bilder,
Generieren mindestens eines Sollbilds der Verstärkungskorde in Abhängigkeit von dem Abstand und dem Durchmesser der Verstärkungskorde,
Bestimmen eines gefalteten Binärmaskenbilds, um falsche Erkennungen zu vermeiden, durch das Durchführen der folgenden Schritte:

Definieren einer Geraden parallel zu der Bilderfassungsrichtung des Scanners, die das Segmentierungsbinärmaskenbild in einen ersten Teil und einen zweiten Teil trennt,

Durchführen einer Spiegelungsoperation gemäß der Geraden an dem zweiten Teil des Segmentierungsbinärmaskenbilds, der einer Prüfkörperhälfte entspricht, und

Bestimmen eines gefalteten Binärmaskenbilds durch das Durchführen einer logischen ODER-Operation zwischen jedem Pixel einer ersten Maskenhälfte und jedem Pixel der gespiegelten zweiten Maskenhälfte, um die Pixel übereinanderzulegen, die sichtbaren Verstärkungskorden in den zwei Prüfkörperhälften entsprechen,

Bestimmen eines modifizierten gefalteten Binärmaskenbilds durch das Durchführen der folgenden Schritte:

wenn ein angepasstes Sollbild nicht verfügbar ist, Dilatieren des gefalteten Binärmaskenbilds durch ein strukturierendes Element, das eine Linie gemäß der Bilderfassungsrichtung des Scanners mit einer Breite in Abhängigkeit von der Distanz zwischen zwei Verstärkungskorden und dem Durchmesser eines Verstärkungskords darstellt, dann

anschließend Durchführen einer logischen UND-Operation zwischen dem Sollbild der Verstärkungskorde und dem nach der Dilatation erhaltenen Bild, um ein Bild zu erhalten, das als dilatiertes gefaltetes Binärmaskenbild bezeichnet wird,

anschließend Durchführen einer morphologischen Rekonstruktion pro Linie mit dem dilatierten gefalteten Binärmaskenbild als Marker und dem Sollbild als Maske, um ein modifiziertes gefaltetes Binärmaskenbild zu erhalten,

anschließend Bestimmen eines Haftungsgrades, der gleich dem Wert eins minus das Verhältnis der Oberfläche der Verstärkungskorde in dem modifizierten gefalteten Binärmaskenbild und der Oberfläche der Verstärkungskorde in dem Sollbild der Verstärkungskorde ist, wenn ein angepasstes Sollbild verfügbar ist,

Dilatieren des gefalteten Binärmaskenbilds durch ein strukturierendes Element, das eine Linie gemäß der Bilderfassungsrichtung des Scanners mit einer Breite in Abhängigkeit von der Distanz zwischen zwei Verstärkungskorden und dem Durchmesser eines Verstärkungskords darstellt, dann

anschließend Durchführen einer logischen UND-Operation zwischen dem angepassten Sollbild der Verstärkungskorde und dem nach der Dilatation erhaltenen Bild, um ein Bild zu erhalten, das als dilatiertes gefaltetes Binärmaskenbild bezeichnet wird,

anschließend Durchführen einer morphologischen Rekonstruktion pro Linie mit dem dilatierten gefalteten Binärmaskenbild als Marker und dem angepassten Sollbild als Maske, um ein modifiziertes gefaltetes Binärmaskenbild zu erhalten,

anschließend Bestimmen eines Haftungsgrades, der gleich dem Wert eins minus das Verhältnis der Oberfläche der Verstärkungskorde in dem modifizierten gefalteten Binärmaskenbild und der Oberfläche der Verstärkungskorde in dem angepassten Sollbild der Verstärkungskorde ist.

13. Verfahren nach Anspruch 12, wobei, um ein Segmentierungsbinärmaskenbild zu bestimmen, durch die Anwendung eines SLIC-Algorithmus eine Zerlegung in Superpixel auf das beschnittene Bild angewendet wird, um ein aus Superpixeln zusammengesetztes Bild zu erhalten, wobei ein Superpixel durch das Gruppieren von zusammenhängenden Pixeln mit ähnlichen Eigenschaften bestimmt wird,

anschließend die Segmentierungsbinärmaske bestimmt wird, die einen ersten booleschen Wert für jedes Pixel innerhalb eines Superpixels, das gleichzeitig eine Exzentrizität größer als ein Exzentrizitätsschwellenwert und eine Leuchtdichte größer als ein Leuchtdichteschwellenwert aufweist, und einen zweiten booleschen Wert für die anderen Pixel beinhaltet.

14. Verfahren nach einem der Ansprüche 12 oder 13, wobei, um ein angepasstes Sollbild zu generieren,

eine logische UND-Operation zwischen dem Segmentierungsmaskenbild und dem Sollbild durchgeführt wird, dann

die Positionsabweichung zwischen den Korden des Sollbilds und denjenigen des Segmentierungsbinärmaskenbilds gemessen wird,

ein neues Sollbild bestimmt wird, das einen Wert eines Zwischenabstands und einer Position des ersten Kords aufweist, der in einem Intervall von Werten von Zwischenabständen und Positionen des ersten Kords, die um die Anfangswerte herum definiert sind, enthalten ist, und die Positionsabweichung zwischen den Korden des neuen Sollbilds und denjenigen des Segmentierungsbinärmaskenbilds gemessen wird,

die Schritte zur Bestimmung eines neuen Sollbilds und zur Messung der Positionsabweichung für eine vordefinierte Anzahl von Iterationen in Schleife wiederholt werden, dann
die Werte von Zwischenabständen und Positionen des ersten Kords zurückbehalten werden, die mit dem größten Wert unter den bestimmten Abweichungswerten assoziiert sind, anschließend ein angepasstes Sollbild in Abhängigkeit von den zurückbehaltenen Werten eines Zwischenabstands der Korde und einer Position des ersten Kords sowie ihrem Durchmesser bestimmt wird.

15. Verfahren zur Schätzung eines Haftungsgrades zwischen der Kautschukzusammensetzung und den Verstärkungslagen eines Prüfkörpers, der für einen zu charakterisierenden Reifen repräsentativ ist,

wobei der Prüfkörper mindestens zwei Verstärkungslagen beinhaltet, die in der Kautschukzusammensetzung eingebettet sind, wobei jede Verstärkungslage wiederum Verstärkungskorde beinhaltet, die nebeneinander angeordnet sind,
wobei das Verfahren die folgenden Schritte beinhaltet:

Kochen des Prüfkörpers unter Druck, dann Durchführen eines Abreißversuchs durch Abziehen von zwei Verstärkungslagen des Prüfkörpers,
**dadurch gekennzeichnet, dass** es die folgenden Schritte beinhaltet:
Anordnen der zwei Prüfkörperhälften auf einem Flachbettscanner, ausgerichtet nach der Bilderfassungsrichtung des Scanners,
Erfassen eines Bilds über die gesamte Oberfläche des Scanners,
Durchführen einer Beschneidung der erfassten Bilder, sodass nur das Bild der Prüfkörperhälften übrig bleibt, anschließend Bestimmen mindestens eines Segmentierungsbinärmaskenbilds, das die Verstärkungsbereiche von den Kautschukzusammensetzungsbereichen trennt, durch Zerlegung in Superpixel auf Grundlage der Pixel der beschnittenen erfassten Bilder,
Generieren mindestens eines Sollbilds der Verstärkungskorde in Abhängigkeit von dem Abstand und dem Durchmesser der Verstärkungskorde,
Generieren eines angepassten Sollbilds durch das Durchführen der folgenden Schritte:

Durchführen einer logischen UND-Operation zwischen dem gefalteten Binärmaskenbild und dem Sollbild, dann Messen der Positionsabweichung zwischen den Korden des Sollbilds und denjenigen des gefalteten Binärmaskenbilds, Bestimmen eines neuen Sollbilds, das einen Wert eines Zwischenabstands und einer Position des ersten Kords aufweist, der in einem Intervall von Werten von Zwischenabständen und Positionen des ersten Kords,
die um die Anfangswerte herum definiert sind, enthalten ist, und Messen der Positionsabweichung zwischen den Korden des neuen Sollbilds und denjenigen des gefalteten Binärmaskenbilds,
Wiederholen der Schritte zur Bestimmung eines neuen Sollbilds und zur Messung der Positionsabweichung für eine vordefinierte Anzahl von Iterationen in Schleife, dann
Zurückbehalten der Werte von Zwischenabständen und Positionen des ersten Kords, die mit dem größten Wert unter den bestimmten Abweichungswerten assoziiert sind, anschließend Bestimmen eines angepassten Sollbilds in Abhängigkeit von den zurückbehaltenen Werten eines Zwischenabstands der Korde und einer Position des ersten Kords sowie ihrem Durchmesser,
Bestimmen eines nachjustierten gefalteten Binärmaskenbilds durch das Durchführen der folgenden Schritte:

Bestimmen von zwei Segmentierungsbinärmaskenbildhälften auf Grundlage des Segmentierungsbinärmaskenbilds und für jede Segmentierungsbinärmaskenbildhälfte, Generieren einer Sollbildhälfte, Bestimmen einer angepassten Sollbildhälfte in Abhängigkeit von der Sollbildhälfte und der Segmentierungsbinärmaskenbildhälfte und Bestimmen einer dilatierten Segmentierungsbinärmaskenbildhälfte in Abhängigkeit von der Segmentierungsbinärmaskenbildhälfte und der angepassten Sollbildhälfte, dann
Definieren einer Geraden parallel zu der Bilderfassungsrichtung des Scanners, die das Segmentierungsbinärmaskenbild in einen ersten Teil und einen zweiten Teil trennt,
Durchführen einer Spiegelungsoperation gemäß der Geraden an der dilatierten Segmentierungsbinärmaskenbildhälfte, die dem zweiten Teil des Segmentierungsbinärmaskenbilds und einer Prüfkörperhälfte entspricht,
Anwenden einer Verschiebung gemäß der Bilderfassungsrichtung des Scanners auf das Bild der Prüfkörperhälfte, das sich aus der Spiegelungsoperation ergibt,

Bestimmen eines nachjustierten gefalteten Binärmaskenbilds durch das Durchführen einer logischen ODER-Operation zwischen jedem Pixel der ersten Maskenhälfte und jedem Pixel der gespiegelten zweiten Maskenhälfte, um die Pixel übereinanderzulegen, die sichtbaren Verstärkungskorden in den zwei Prüfkörperhälften entsprechen,

anschließend Bestimmen eines Haftungsgrades, der gleich dem Wert eins minus das Verhältnis der Oberfläche der Verstärkungskorde in dem nachjustierten gefalteten Binärmaskenbild und der Oberfläche der Verstärkungskorde in dem angepassten Sollbild der Verstärkungskorde ist.

**16.** Verfahren nach Anspruch 15, wobei

mindestens zwei Grade bestimmt werden, die jeweils einer Verschiebung gemäß der Bilderfassungsrichtung des Scanners entsprechen, dann

ein endgültiger Grad als der kleinste Grad unter den Graden, die für jede Verschiebung gemäß der Bilderfassungsrichtung des Scanners erhalten werden, bestimmt wird.

**17.** Verfahren nach Anspruch 16, wobei, um ein Segmentierungsbinärmaskenbild zu bestimmen, durch die Anwendung eines SLIC-Algorithmus eine Zerlegung in Superpixel auf das beschnittene Bild angewendet wird, um ein aus Superpixeln zusammengesetztes Bild zu erhalten, wobei ein Superpixel durch das Gruppieren von zusammenhängenden Pixeln mit ähnlichen Eigenschaften bestimmt wird,

anschließend die Segmentierungsbinärmaske bestimmt wird, die einen ersten booleschen Wert für jedes Pixel innerhalb eines Superpixels, das gleichzeitig eine Exzentrizität größer als ein Exzentrizitätsschwellenwert und eine Leuchtdichte größer als ein Leuchtdichteschwellenwert aufweist, und einen zweiten booleschen Wert für die anderen Pixel beinhaltet.

## Claims

**1.** Method for estimating a score of adhesion between the rubber composition and the reinforcing plies of a specimen representative of a tyre to be characterized,

the specimen comprising at least two reinforcing plies embedded in the rubber composition, each reinforcing ply itself comprising reinforcing cords placed beside one another,
the method comprising the following stages:

the specimen is baked under pressure, then
a stripping test is carried out by peeling apart two reinforcing plies of the specimen,
**characterized in that** it comprises the following stages:

the two half-specimens are placed on a flatbed scanner, aligned in the scanner's image acquisition direction,
an image is acquired over the entire surface of the scanner,
the acquired images are cropped so as to retain only the image of the half-specimens,
at least one binary segmentation mask image separating the reinforcement zones from the rubber composition zones is then determined by superpixel decomposition from the pixels of the cropped acquired images,
at least one theoretical image of the reinforcing cords is generated as a function of the spacing and diameter of the reinforcing cords,
a score equal to the value one minus the ratio of the surface area of the reinforcing cords in the binary segmentation mask image and the surface area of the reinforcing cords in the theoretical image of the reinforcing cords is determined.

**2.** Method according to claim 1, in which the images of the half-specimens are acquired using a rigid half-specimen support which makes it possible to control the positioning of each half-specimen on the glass of the scanner as well as their alignment on the acquisition zone of the scanner.

**3.** Method according to any of the preceding claims, in which, in order to determine a binary segmentation mask image, a superpixel decomposition is applied to the cropped image by applying a SLIC algorithm, in order to obtain an image composed of superpixels, a superpixel being determined by grouping together related pixels having similar characteristics,
the binary segmentation mask is then determined, comprising a first boolean value for each pixel within a superpixel having both an eccentricity greater than an eccentricity threshold and a luminance greater than a luminance threshold, and a second boolean value for the other pixels.

4. Method according to any one of the preceding claims, in which, in order to generate an adjusted theoretical image

a logical AND operation is performed between the segmentation mask image and the theoretical image, then the difference in position between the cords in the theoretical image and those in the binary segmentation mask image is measured,
a new theoretical image is determined having a value for the pitch and position of the first cord lying within an interval of predefined values for the pitch and positions of the first cord around the initial values, and the difference in position between the cords in the new theoretical image and those in the binary segmentation mask image is measured,
the steps of determining a new theoretical image and measuring the position deviation are repeated in a loop for a predefined number of iterations, and then the pitch and position values of the first cord associated with the largest of the deviation values determined are retained,
a theoretical image is then determined, adjusted as a function of the values retained for the pitch of the cords and the position of the first cord, as well as their diameter.

5. Method of estimating an adhesion rating between the rubber composition and the reinforcing plies of a specimen representative of a tyre to be characterised,

the specimen comprising at least two reinforcing plies embedded in the rubber composition, each reinforcing ply itself comprising reinforcing cords arranged side by side,
the process comprising the following steps:

the specimen is pressure- baked, then
a peel test is carried out on two reinforcing plies of the specimen,
**characterised in that** it comprises the following steps:

the two half-specimens are placed on a flatbed scanner, aligned in the scanner's image acquisition direction,
an image is acquired over the entire surface of the scanner,
the acquired images are cropped so that only the image of the half-specimens is retained,
at least one theoretical image of the reinforcing cords is generated as a function of the spacing and diameter of the reinforcing cords,
a modified segmentation binary mask image is determined by carrying out the following steps:

if an adjusted theoretical image is not available,
the binary segmentation mask is expanded by a structuring element representing a line in the scanner's image acquisition direction with a width that is a function of the distance between two reinforcement cables and the diameter of a reinforcement cable, then
a logical AND operation is then performed between the theoretical image of the reinforcement cords and the image obtained after expansion so as to obtain an image known as the expanded binary segmentation mask image, morphological reconstruction is then performed per line with the expanded binary segmentation mask image as the marker and the theoretical image as the mask in order to obtain a modified binary segmentation mask image,
an adhesion score is then determined equal to the value one minus the ratio of the surface area of the reinforcing cords in the modified segmentation binary mask image and the surface area of the reinforcing cords in the theoretical image of the reinforcing cords,
if an adjusted theoretical image is available,
the binary segmentation mask is expanded by a structuring element representing a line in the scanner's image acquisition direction with a width that is a function of the distance between two reinforcing cables and the diameter of a reinforcing cable, then
a logical AND operation is then performed between the adjusted theoretical image of the reinforcement cords and the image obtained after dilation, so as to obtain an image known as the dilated segmentation binary mask image,

a morphological reconstruction is then carried out per line with the dilated binary segmentation mask image as the marker and the adjusted theoretical image as the mask in order to obtain a modified binary segmentation mask image,

an adhesion score is then determined, equal to the value one minus the ratio of the surface area of the reinforcing cords in the modified binary segmentation mask image to the surface area of the reinforcing cords in the adjusted theoretical image of the reinforcing cords.

6. Method according to claim 5, in which, in order to determine a binary segmentation mask image, a superpixel decomposition is applied to the cropped image by applying a SLIC algorithm, in order to obtain an image composed of superpixels, a superpixel being determined by grouping together related pixels having similar characteristics,

the binary segmentation mask is then determined, comprising a first boolean value for each pixel within a superpixel having both an eccentricity greater than an eccentricity threshold and a luminance greater than a luminance threshold, and a second boolean value for the other pixels.

7. Method according to any one of claims 5 or 6, in which, in order to generate an adjusted theoretical image, an AND logical operation is performed between the segmentation mask image and the theoretical image,

a logical AND operation is performed between the segmentation mask image and the theoretical image, and then the difference in position between the cords in the theoretical image and those in the binary segmentation mask image is measured,

a new theoretical image is determined having a value for the pitch and position of the first cord lying within a predefined range of pitch values and positions of the first cord around the initial values, and the difference in position between the cords in the new theoretical image and those in the binary segmentation mask image is measured,

the steps of determining a new theoretical image and measuring the position deviation are repeated in a loop for a predefined number of iterations, then

the pitch and position values of the first cord associated with the largest of the deviation values determined are retained,

a theoretical image is then determined, adjusted as a function of the values retained for the pitch of the cables and the position of the first cord, as well as their diameter.

8. Method for estimating an adhesion rating between the rubber composition and the reinforcing plies of a specimen representative of a tyre to be characterised,

the specimen comprising at least two reinforcing plies embedded in the rubber composition, each reinforcing ply itself comprising reinforcing cords arranged side by side, the method comprising the following steps:

the specimen is pressure-cooked, then
a peel test is carried out on two reinforcing plies of the specimen,
**characterised in that** it comprises the following steps:

the two half-specimens are placed on a flatbed scanner,
aligned in the scanner's image acquisition direction,
an image is acquired over the entire surface of the scanner,
the acquired images are cropped to retain only the image of the half-specimens,
at least one binary segmentation mask image separating the reinforcement zones from the rubber composition zones is then determined by superpixel decomposition from the pixels of the cropped acquired images,
at least one theoretical image of the reinforcement cords is generated as a function of the spacing and diameter of the reinforcement cords,
a binary fold mask image is determined in order to avoid false detections by carrying out the following steps:

a straight line parallel to the scanner image acquisition direction is defined, separating the binary segmentation mask image into a first part and a second part,
a mirror operation is performed with respect to the said straight line on the second part of the binary segmentation mask image corresponding to a half-specimen, and

a folding binary mask image is determined by performing a logical OR operation between each pixel of the first half-mask and each pixel of the mirror of the second half-mask, so as to superimpose the pixels corresponding to reinforcing cords visible on the two half-specimens,

an adhesion score is then determined equal to the value one minus the ratio of the surface area of the reinforcing cords in the binary folding mask image and the surface area of the reinforcing cords in the theoretical image of the reinforcing cords.

9. Method according to claim 8, in which, in order to determine a binary segmentation mask image, a superpixel decomposition is applied to the cropped image by applying a SLIC algorithm, in order to obtain an image composed of superpixels, a superpixel being determined by grouping together related pixels having similar characteristics,

the binary segmentation mask is then determined, comprising a first boolean value for each pixel within a superpixel having both an eccentricity greater than an eccentricity threshold and a luminance greater than a luminance threshold, and a second boolean value for the other pixels.

10. Method for estimating an adhesion rating between the rubber composition and the reinforcing plies of a specimen representative of a tyre to be characterised,

the specimen comprising at least two reinforcing plies embedded in the rubber composition, each reinforcing ply itself comprising reinforcing cords arranged side by side,

the process comprising the following steps:

the specimen is pressure-cooked, then
a peel test is carried out on two reinforcing plies of the specimen,
**characterised in that** it comprises the following steps:

the two half-specimens are placed on a flatbed scanner, aligned in the scanner's image acquisition direction,
an image is acquired over the entire surface of the scanner,
the acquired images are cropped so that only the image of the half-specimens remains,
at least one binary segmentation mask image separating the reinforcement zones from the rubber composition zones is then determined by superpixel decomposition from the pixels of the cropped images acquired,
at least one theoretical image of the reinforcement cords is generated
is generated as a function of the spacing and diameter of the reinforcing cords,
a binary fold mask image is determined in order to avoid false detections by carrying out the following steps:

a straight line parallel to the scanner's image acquisition direction is defined, separating the binary segmentation mask image into a first part and a second part,
a mirror operation is performed with respect to the said straight line on the second part of the binary segmentation mask image corresponding to a half-specimen, and
a fallback binary mask image is determined by performing a logical OR operation between each pixel of a first half-mask and each pixel of the mirror of a second half-specimen, so as to superimpose the pixels corresponding to reinforcing cords visible on the two half-specimens,
an adjusted theoretical image is generated by carrying out the following steps:

an AND logic operation is performed between the binary folding mask image and the theoretical image, then
the difference in position between the cords in the theoretical image and those in the folded binary mask image is measured, a new theoretical image is determined having a value for the pitch and position of the first cord lying within a predefined range of values for the pitch and positions of the first cord around the initial values, and the difference in position between the cords in the new theoretical image and those in the folded binary mask image is measured, the steps of determining a new theoretical image and measuring the position deviation are repeated in a loop for a predefined number of iterations, then
the pitch and position values of the first cord associated with the largest of the deviation values determined are retained,
a theoretical image is then determined, adjusted as a function of the retained values for the pitch of the cords and the position of the first cord, as well as their diameter, and

an adhesion score is then determined which is equal to the value one minus the ratio of the surface area of the reinforcing cords in the binary segmentation mask image and the surface area of the reinforcing cords in the adjusted theoretical image of the reinforcing cords.

11. Method according to claim 10, in which, in order to determine a binary segmentation mask image, a superpixel decomposition is applied to the cropped image by applying a SLIC algorithm, in order to obtain an image composed of superpixels,

a superpixel is determined by grouping together related pixels with similar characteristics,

the binary segmentation mask is then determined, comprising a first boolean value for each pixel within a superpixel having both an eccentricity greater than an eccentricity threshold and a luminance greater than a luminance threshold, and a second boolean value for the other pixels.

12. Method for estimating an adhesion rating between the rubber composition and the reinforcing plies of a specimen representative of a tyre to be characterised,

the specimen comprising at least two reinforcing plies embedded in the rubber composition, each reinforcing ply itself comprising reinforcing cords arranged side by side,

the method comprising the following steps:

the specimen is pressure-cooked, then a peel test is carried out on two reinforcing plies of the specimen, **characterised in that** it comprises the following steps:

the two half-specimens are placed on a flatbed scanner, aligned in the scanner's image acquisition direction,

an image is acquired over the entire surface of the scanner,

the acquired images are cropped so that only the image of the half-specimens remains,

at least one binary segmentation mask image separating the reinforcement zones from the rubber composition zones is then determined by superpixel decomposition from the pixels of the cropped acquired images,

at least one theoretical image of the reinforcement cords is generated as a function of the spacing and diameter of the reinforcement cords, a replica binary mask image is determined in order to avoid false detections by carrying out the following steps:

a straight line parallel to the scanner's image acquisition direction is defined, separating the binary segmentation mask image into a first part and a second part,

a mirror operation is performed along the said straight line on the second part of the segmentation binary mask image corresponding to a half-specimen, and

a folding binary mask image is determined by performing a logical OR operation between each pixel of a first half-mask and each pixel of the mirror of the second half-mask, so as to superimpose the pixels corresponding to reinforcing cords visible on the two half-specimens,

a modified binary fold mask image is determined by carrying out the following steps:

if a theoretical adjusted image is not available,

the binary fold mask image is expanded by a structuring element representing a line in the scanner's image acquisition direction with a width that is a function of the distance between two reinforcing cords and the diameter of a reinforcing cord, then

a logical AND operation is then performed between the theoretical image of the reinforcement cables and the image obtained after dilation, so as to obtain an image known as a binary folding mask image,

morphological reconstruction is then carried out by line with the dilated binary fold mask image as the marker and the theoretical image as the mask in order to obtain a modified binary fold mask image,

an adhesion score is then determined equal to the value one minus the ratio of the surface area of the reinforcing cords in the modified binary fold mask image to the surface area of the reinforcing cords in the theoretical image of the reinforcing cords,

if an adjusted theoretical image is available,

the binary fold mask image is dilated by a structuring element representing a line in the scanner image acquisition direction with a width that is a function of the distance between two reinforcing cords and of the diameter of a reinforcing cord, then a logical AND operation is performed between the adjusted theoretical image of the reinforcing cords and the image obtained after dilation so as to obtain an image referred to as a dilated binary fold mask image,

a morphological reconstruction is then carried out per line with the expanded binary fold mask image as the marker and the adjusted theoretical image as the mask in order to obtain a modified binary fold mask image,

an adhesion score is then determined which is equal to the value one minus the ratio of the surface area of the reinforcing cords in the modified binary fold mask image to the surface area of the reinforcing cords in the adjusted theoretical image of the reinforcing cords.

13. Method according to claim 12, in which, in order to determine a binary segmentation mask image, a superpixel decomposition is applied to the cropped image by applying a SLIC algorithm, in order to obtain an image composed of superpixels, a superpixel being determined by grouping together related pixels having similar characteristics,

the binary segmentation mask is then determined, comprising a first boolean value for each pixel within a superpixel having both an eccentricity greater than an eccentricity threshold and a luminance greater than a luminance threshold, and a second boolean value for the other pixels.

14. Method according to any one of claims 12 or 13, in which, in order to generate an adjusted theoretical image, an AND logical operation is performed between the segmentation mask image and the theoretical image,

a logical AND operation is performed between the segmentation mask image and the theoretical image, and then the difference in position between the cords in the theoretical image and those in the binary segmentation mask image is measured,

a new theoretical image is determined having a value for the pitch and position of the first cord within a predefined range of values for the pitch and position of the first cord around the initial values, and the difference in position between the cables in the new theoretical image and those in the binary segmentation mask image is measured, the steps of determining a new theoretical image and measuring

the steps of determining a new theoretical image and measuring the position error are repeated in a loop for a predefined number of iterations, then

the pitch and position values of the first cord associated with the largest of the deviation values determined are retained,

a theoretical image is then determined, adjusted as a function of the values retained for the pitch of the cables and the position of the first cord, as well as their diameters.

15. Method for estimating an adhesion rating between the rubber composition and the reinforcing plies of a specimen representative of a tyre to be characterised,

the specimen comprising at least two reinforcing plies embedded in the rubber composition, each reinforcing ply itself comprising reinforcing cords arranged side by side,

the process comprising the following steps

the specimen is pressure-cooked, then

a peel test is carried out on two reinforcing plies of the specimen,

**characterised in that** it comprises the following steps:

the two half-specimens are placed on a flatbed scanner, aligned in the scanner's image acquisition direction, an image is acquired over the entire surface of the scanner,

the acquired images are cropped so that only the image of the half-specimens remains,

at least one binary segmentation mask image separating the reinforcement zones from the rubber composition zones is then determined by superpixel decomposition from the pixels of the cropped acquired images,

at least one theoretical image of the reinforcement cords is generated as a function of the spacing and diameter of the reinforcement cords,

an adjusted theoretical image is generated by carrying out the following steps:

an AND logic operation is performed between the binary folding mask image and the theoretical image, then

the difference in position between the cables in the theoretical image and those in the folded binary mask image is measured, a new theoretical image is determined having a value for the pitch and position of the first cable within a predefined range of values for the pitch and positions of the first cable around the initial values, and the difference in position between the cables in the new theoretical image and those in the folded binary mask image is measured,

the steps of determining a new theoretical image and measuring the position deviation are repeated in a loop for a predefined number of iterations, then

the pitch and position values of the first cord associated with the largest of the deviation values determined are retained,

a theoretical image is then determined, adjusted as a function of the retained values for the pitch of the cables and the position of the first cord, as well as their diameter,

an adjusted binary fallback mask image is determined by carrying out the following steps:

two segmentation binary mask half-images are determined from the segmentation binary mask image, and

for each segmentation binary mask half-image, a theoretical half-image is generated. an adjusted theoretical half-image is determined as a function of the theoretical half-image and the segmentation binary mask half-image, and a dilated segmentation binary mask half-image is determined as a function of the segmentation binary mask half-image and the adjusted theoretical half-image, then

a straight line parallel to the scanner's image acquisition direction is defined, separating the binary segmentation mask image into a first part and a second part,

a mirror operation is performed along the said straight line on the dilated binary segmentation mask half-image corresponding to the second part of the binary segmentation mask image and to a half-specimen,

a shift is applied in the scanner's image acquisition direction to the image of the half-specimen resulting from the mirror operation,

a re-aligned binary fold mask image is determined by performing a logical OR operation between each pixel of the first half-mask and each pixel of the mirror of the second half-mask, so as to superimpose the pixels corresponding to the reinforcing cords visible on the two half-specimens,

an adhesion score is then determined which is equal to the value one minus the ratio of the surface area of the reinforcing cords in the shifted binary fold mask image and the surface area of the reinforcing cords in the adjusted theoretical image of the reinforcing cords.

16. Method according to claim 15, in which,

at least two scores are determined, each corresponding to an offset in the scanner's image acquisition direction, and then

a final score is determined as the minimum score among all the scores obtained for each shift in the scanner's image acquisition direction.

17. Method according to claim 16, in which, in order to determine a binary segmentation mask image, a superpixel decomposition is applied to the cropped image by the application of a SLIC algorithm, in order to obtain an image composed of superpixels, a superpixel being determined by grouping together related pixels having similar characteristics,

the binary segmentation mask is then determined, comprising a first boolean value for each pixel within a superpixel having both an eccentricity greater than an eccentricity threshold and a luminance greater than a luminance threshold, and a second boolean value for the other pixels.

# FIG.1

# FIG.2

# FIG.3

# FIG.4

# FIG.5

# FIG.6

# FIG.7

## FIG.8

13

12

## FIG.9

13    14

15    16

## FIG.10

17

18

## FIG.11

19

20

# FIG.12

19                   21                   22

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RADHAKRISHNA ACHANTA** ; **APPU SHAJI** ; **KEVIN SMITH** ; **AURELIEN LUCCHI** ; **PASCAL FUA** ; **SABINE SÜSSTRUNK**. SLIC Superpixels Compared to State-of-the-art Superpixel Methods. *IEEE Transactions on Pattern Analysis and Machine Intelligence*, May 2012, vol. 34 (11), 2274-2282